# EUROPÄISCHE PATENTANMELDUNG

(11) **EP 3 505 366 A1**
(43) Veröffentlichungstag der Anmeldung: **03.07.2019**
(21) Anmeldenummer: 17211030.6
(22) Anmeldetag: 29.12.2017
(51) Int. Cl.: B60C 1/00, C08K 5/3465, C08K 5/3495

(54) **NEUE KAUTSCHUKMISCHUNGEN**

(71) Anmelder: ARLANXEO Deutschland GmbH, 41540 Dormagen (DE)
(72) Erfinder: OBRECHT, Werner, 47447 Moers (DE); FRÜH, Thomas, 42115 Wuppertal (DE)

(57) **Zusammenfassung**

Bereitgestellt werden neue vulkanisierbare Kautschukmischungen, die bi- oder polycyclische Amine als Vulkanisationsbeschleuniger für die Schwefelvulkanisation enthalten, sich durch eine verbesserte Verarbeitungssicherheit auszeichnen und den Einsatz schädlicher Vulkanisationsbeschleuniger nicht mehr erfordern. Gegenstand der Erfindung ist ferner ein Verfahren zur Herstellung dieser Kautschukmischungen, ihre Vulkanisation sowie die dabei erhaltenen Vulkanisate, sowie die Verwendung mindestens eines bi- oder polycyclischen Amins in Kombination mit Schwefel und/oder mindestens einem Schwefelspender als Vernetzer zur Vernetzung von Kautschukmischungen.

## Beschreibung

Die Erfindung betrifft neue Kautschukmischungen, die bi- oder polycyclische Amine als Vulkanisationsbeschleuniger für die Schwefelvulkanisation enthalten, deren Herstellung sowie ein Verfahren zur Vulkanisation dieser Kautschukmischungen und die dabei hergestellten Vulkanisate, sowie die Verwendung mindestens eines bi- oder polycyclischen Amins in Kombination mit Schwefel und/oder mindestens einem Schwefelspender als Vernetzer zur Vernetzung von Kautschukmischungen.

In der Kautschukindustrie werden Guanidine wie Tetramethylguanidin, Tetraethylguanidin, Diphenylguanidin ("DPG"), Di-o-tolylguanidin ("DOTG") und o-Tolylbiguanidin für die Schwefelvulkanisation von Gummimischungen eingesetzt. Insbesondere Kombinationen der Guanidine mit üblichen Beschleunigern für die Schwefelvulkanisation wie z.B. Mercaptobeschleunigern, Sulfenamiden, Thiuramen und Dithocarbamaten sind bekannt.

Seit der Einführung des sogenannten "grünen Reifens" kommen Guanidine auch in silicahaltigen Kautschukmischungen zum Einsatz, die für Reifenlaufflächen mit niedrigem Rollwiderstand verwendet werden. Beschrieben wird dies beispielsweise in DE-OS 2447614**,** US-A-4,709,065**,** EP-A-0 299 074**,** DE-A-38 136 78**,** EP-A-0 501 227 sowie EP-A-0 447 066**.** Neben einem beschleunigenden Effekt auf die Vulkanisation wirken die Guanidine in derartigen silicahaltigen Kautschukmischungen auch als Katalysatoren für die Silanisierung der Kieselsäure.

Die zuvor genannten Guanidine kommen jedoch wegen ihrer Toxizität zunehmend in Verruf. So werden sie beispielsweise als allergieauslösend eingeschätzt (GUV-Informationen GUV-I 8559 (bisher GUV 50.0.11): "Theorie und Praxis der Prävention: Hautkrankheiten und Hautschutz"; Gesetzliche Unfallversicherung; Berufsgenossenschaft für Gesundheitsdienst und Wohlfahrtspflege) und sollen ersetzt werden. Weiterhin können Guanidine primäre aromatische Amine freisetzen und weisen im Falle des DOTG eine problematische Eigentoxizität auf.

Aus EP-A-0 943 657 ist eine vulkanisierbare Zusammensetzung auf Basis eines carboxylgruppenhaltigen Acrylat-Elastomers, insbesondere eines Copolymers aus einem aliphatischen ungesättigten Dicarbonsäuremonoalkylester und einem Acrylat bekannt. Diese Zusammensetzung enthält ein Mercaptobenzimidazol sowie als Vulkanisationssystem eine Kombination aus einem Diamin als Vernetzer und einem Vulkanisationsbeschleuniger. Bei letzterem kann es sich um ein Guanidin handeln oder aber anstelle des Guanidins um 1,8-Diazabicyclo[5.4.0]undec-7-en (DBU), 1,5-Diazabicyclo[4.3.0]non-5-en (DBN) oder deren Salze.

Die **Aufgabe der vorliegenden Erfindung** bestand somit in der Bereitstellung neuer Kautschukmischungen insbesondere für Reifenanwendungen, die als Vulkanisationsbeschleuniger keine der zuvor genannten toxischen Guanidine enthalten, eine hohe Verarbeitungssicherheit aufweisen, aber trotzdem bei einer sich anschließenden Schwefelvulkanisation effizient sind und somit bei niedrigen (molaren) Mengen an Vernetzern eine hohe Vernetzungsdichte liefern und ferner zu Vulkanisaten mit einem attraktiven Eigenschaftsprofil fuhren.

**Überraschenderweise wurde jetzt gefunden,** dass ein Ersatz der Guanidine in schwefelhaltigen Kautschukmischungen durch bi- oder polycyclische Amine möglich ist.

**Gegenstand der Erfindung** sind daher vulkanisierbare Kautschukmischungen enthaltend
a) mindestens einen doppelbindungshaltigen Kautschuk,
b) mindestens ein bi- oder polycyclisches Amin,
c) Schwefel und/oder mindestens einen Schwefelspender als Vernetzer,
d) mindestens einen Vulkanisationsbeschleuniger, der von Komponente b) verschieden ist,
e) Zinkoxid und Stearinsäure und/oder Zinkstearat,
f) mindestens einen Füllstoff,
g) gegebenenfalls mindestens eine schwefelhaltige siliciumorganische Verbindung, und
h) gegebenenfalls ein oder mehrere weitere Additive,
wobei diese Kautschukmischung keinen Vernetzer enthält, der zwei oder mehr Aminogruppen aufweist oder aber im Rahmen einer Vernetzung zwei oder mehr Aminogruppen in-situ freisetzen kann.

Ein weiterer **Gegenstand der Erfindung** ist ein Verfahren zur Herstellung dieser Kautschukmischungen und ein Verfahren zur Vernetzung dieser Kautschukmischungen unter Herstellung der entsprechenden Vulkanisate. Ein weiterer **Gegenstand der Erfindung** besteht in den Vulkanisaten, insbesondere in Gestalt von Formteilen.

**Überraschenderweise** ist ein Zusatz der unerwünschten Guanidine wie DPG oder DOTG als Vulkanisationsbeschleuniger nicht mehr erforderlich, wenn in der vulkanisierbaren Kautschukmischung mindestens ein bi- oder polycyclisches Amin eingesetzt wird. Auch ohne DPG oder DOTG zeigen die erfindungsgemäßen Kautschukmischungen eine sehr gute Vulkanisationscharakteristik mit guter Vulkanisationsdichte und führen zu Vulkanisaten und Formkörpern mit sehr guten mechanischen und physikalischen Eigenschaften.

Sofern in der erfindungsgemäßen Mischung als zusätzliche Komponenten noch Kieselsäure und eine siliciumorganische Verbindung enthalten sind, wirken die bi- oder polycyclischen Amine außerdem als Katalysator für die Silanisierung der Kieselsäure. Darüber hinaus sind verglichen mit den bisherigen Vulkanisationsbeschleunigern wie DPG deutlich geringere Mengen der bi- oder polycyclischen Amine erforderlich, um eine vergleichbare Vulkanisationsdichte zu erhalten.

Alle Mischungsbestandteile a) bis f) sowie die optionalen schwefelhaltigen siliciumorganischen Verbindungen g), und die optionalen weiteren Additive h) werden nachfolgend im Detail erläutert.

### Komponente a): mindestens ein doppelbindungshaltiger Kautschuk

Doppelbindungshaltige Kautschuke sind im Sinne der vorliegenden Anmeldung ungesättigte Kautschuke, die über C=C Doppelbindungen in der Hauptkette verfügen. Bei diesen C=C doppelbindungshaltigen Kautschuken handelt es sich bevorzugt um solche auf Basis von Dienen. Besonders bevorzugt sind solche doppelbindungshaltigen Kautschuke, die praktisch keinen Gelanteil aufweisen und nach **DIN/ISO 1629** als "R"-Kautschuke bezeichnet werden.

Geeignete Kautschuke sind beispielsweise die Folgenden, die dem Fachmann hinreichend bekannt und von den unterschiedlichsten Anbietern käuflich erhältlich sind:
- NR: Naturkautschuk
- EPDM: Ethylen-Propylen-Dien Kautschuke
- SBR: Vinylaromat/Dien-Kautschuke,
- BR: Polybutadienkautschuk
- IR: Polyisopren
- SIBR: Styrol/Isopren/Butadien-Kautschuk
- BIR: Butadien/Isopren-Kautschuk
- IIR: Butylkautschuk (Isobuten/Isopren-Kautschuk)
- XIIR: Halobutylkautschuk, insbesondere Chlor- oder Brombutylkautschuk
- NBR: Nitrilkautschuk
- XNBR: carboxylierter Butadien/Acrylnitril-Kautschuk
- SNBR: Styrol/Butadien/Acrylnitril-Kautschuk
- XSBR: carboxylierter Styrol/Butadien-Kautschuk
- CR: Polychloropren
- ENR: epoxydierter Naturkautschuk

Bevorzugt werden in der erfindungsgemäßen Kautschukmischung NR (Naturkautschuk), SBR (Vinylaromat/Dien-Kautschuke), BR (Polybutadienkautschuk), IR (Polyisopren), IBR (Isopren/ Butadien-Kautschuk), IIR (Isobuten/Isopren-Kautschuk), BIR (Butadien/Isopren-Kautschuk) und SIBR (Styrol/Isopren-Kautschuk) oder Mischungen daraus eingesetzt. Die nachfolgenden Erläuterungen sollen nur einige Kautschuke davon illustrieren, den Umfang der Erfindung jedoch nicht beschränken.

### EPDM:

Als Kautschuke können in der Komponente a) der erfindungsgemäßen Mischung ein oder mehrere EPDM Kautschuke enthalten sein.

Hierbei handelt es sich um Polymere, die durch Terpolymerisation von Ethylen und größeren Anteilen Propylen sowie einigen Gew.-% eines dritten Monomeren mit Dien-Struktur hergestellt werden. Das Dien-Monomer stellt dabei die Doppelbindungen für die sich anschließende Vulkanisation bereit. Als Dien-Monomere finden vorwiegend cis,cis-1,5-Cyclooctadien (COD), exo-Dicyclopentadien (DCP), endo-Dicyclopentadien (EDCP), 1,4-Hexadien (HX) und auch 5-Ethyliden-2-norbornen (ENB) oder 5-Vinyl-2-norbornen (VNB) Verwendung.

EPDM Kautschuke, die im erfindungsgemäßen Sinn verwendet werden können, sind käuflich erhältlich, z.B. als Produkte aus der Produktreihe der Marke Buna EPG® und Buna EPT® von der ARLANXEO GmbH, oder aber auch nach dem Fachmann geläufigen Methoden herstellbar.

### SBR (Vinylaromat/Dien-Kautschuke):

Unter SBR-Kautschuken werden Kautschuke auf Basis von Vinylaromaten und Dienen verstanden und zwar sowohl Lösungs-SBR-Kautschuke, abgekürzt als "L-SBR", als auch Emulsions-SBR-Kautschuke, abgekürzt als "E-SBR".

Unter **L-SBR** versteht man Kautschuke, die in einem Lösungsprozess auf der Basis von Vinylaromaten und Dienen, bevorzugt konjugierten Dienen hergestellt werden (H. L. Hsieh, R. P. Quirk, Marcel Dekker Inc. New York-Basel 1996; I. Franta Elastomers and Rubber Compounding Materials; Elsevier 1989, Seite 73-74, 92-94; Houben-Weyl, Methoden der Organischen Chemie, Thieme Verlag, Stuttgart, 1987, Band E 20, Seiten 114 bis 134; Ullmann's Encyclopedia of Industrial Chemistry, Vol A 23, Rubber 3. Synthetic, VCH Verlagsgesellschaft mbH, D-69451 Weinheim, 1993, S. 240-364). Geeignete vinylaromatische Monomere sind Styrol, o-, m- und p- Methylstyrol, technische Methylstyrolgemische, p-tert.-Butylstyrol, α-Methylstyrol, p-Methoxystyrol, Vinylnaphthalin, Divinylbenzol, Trivinylbenzol und Divinylnaphthalin. Bevorzugt ist Styrol. Der Gehalt an einpolymerisiertem Vinylaromat liegt bevorzugt im Bereich von 5 bis 50 Gew.-%, besonders bevorzugt im Bereich von 10 bis 40 Gew.-%. Geeignete Diolefine sind 1,3-Butadien, Isopren, 1,3-Pentadien, 2,3-Dimethylbutadien, 1-Phenyl-1,3-butadien und 1,3-Hexadien. Bevorzugt sind 1,3-Butadien und Isopren. Der Gehalt an einpolymerisierten Dienen liegt im Bereich von 50 bis 95 Gew. %, bevorzugt im Bereich von 60 bis 90 Gew. %. Der Gehalt an Vinylgruppen im einpolymerisierten Dien liegt im Bereich von 10 bis 90 %, der Gehalt an 1,4-trans-ständigen Doppelbindungen liegt im Bereich von 20 bis 80 % und der Gehalt an 1,4-cis ständigen Doppelbindungen ist komplementär zur Summe aus Vinylgruppen und 1,4-trans-ständigen Doppelbindungen. Der Vinylgehalt des L-SBR beträgt vorzugsweise > 20 %.

Üblicherweise sind die polymerisierten Monomeren und die unterschiedlichen Dien-Konfigurationen statistisch im Polymeren verteilt. Auch Kautschuke mit blockartig aufgebauter Struktur, die als Integralkautschuk bezeichnet werden, sollen unter die Definition von L-SBR (A) fallen (K.-H. Nordsiek, K.-H. Kiepert, GAK Kautschuk Gummi Kunststoffe 33 (1980), no. 4, 251-255).

Unter **L-SBR** sollen sowohl lineare als auch verzweigte oder endgruppenmodifizierte Kautschuke verstanden werden. Beispielsweise sind derartige Typen in DE 2034989C2 und JP-A-56-104 906 genannt. Als Verzweigungsmittel wird bevorzugt Siliciumtetrachlorid bzw. Zinntetrachlorid eingesetzt.

Die Herstellung dieser Vinylaromat/Dien-Kautschuke als Kautschukkomponente a) für die erfindungsgemäßen Kautschukmischungen erfolgt insbesondere durch anionische Lösungspolymerisation, d. h. mittels eines Katalysators auf Alkali- oder Erdalkalimetallbasis in einem organischen Lösungsmittel.

Die in Lösung polymerisierten Vinylaromat/Dien-Kautschuke besitzen vorteilhafterweise Mooney-Viskositäten (ML 1+4 bei 100°C) im Bereich von 20 bis 150 Mooneyeinheiten, vorzugsweise im Bereich von 30 bis 100 Mooneyeinheiten. Insbesondere die hochmolekularen L-SBR-Typen mit Mooney-Viskositäten von > 80 ME können Öle in Mengen von 30 bis 100 Gew.-Teile bezogen auf 100 Gew.-Teile Kautschuk enthalten. Ölfreie L-SBR-Kautschuke weisen Glastemperaturen im Bereich von -80° bis +20° C auf, bestimmt durch Differentialthermoanalyse (DSC).

Unter **E-SBR** versteht man Kautschuke, die in einem Emulsionsprozess auf der Basis von Vinylaromaten und Dienen, bevorzugt konjugierten Dienen, und gegebenenfalls weiteren Monomeren hergestellt werden (Ullmann's Encyclopedia of Industrial Chemistry, Vol A 23, Rubber 3. Synthetic, VCH Verlagsgesellschaft mbH, D-69451 Weinheim, 1993, S. 247-251). Vinylaromaten sind Styrol, p-Methylstyrol und alpha-Methylstyrol. Diene sind insbesondere Butadien und Isopren. Weitere Monomere sind insbesondere Acrylnitril. Der Gehalt an einpolymerisiertem Vinylaromat liegt im Bereich von 10 bis 60 Gew. %. Die Glastemperatur liegt üblicherweise im Bereich von -50 °C bis +20°C (bestimmt mittels DSC) und die Mooney-Viskositäten (ML 1+4 bei 100°C) liegen im Bereich von 20 bis 150 Mooneyeinheiten. Insbesondere die hochmolekularen E-SBR-Typen mit Mooneywerten > 80 ME können Öle in Mengen von 30 bis 100 Gew.-Teile bezogen auf 100 Gew.-Teile Kautschuk enthalten. Die ölfreien E-SBR-Kautschuke weisen Glastemperaturen von -70° bis +20° C auf, bestimmt durch Differentialthermoanalyse (DSC).

Sowohl E-SBR als auch L-SBR können in den erfindungsgemäßen Kautschukmischungen auch in ölversteckter Form eingesetzt werden. Die Öle dienen als Weichmacher. Anwendung finden dabei dem Fachmann bekannte und industrieübliche Öle. Bevorzugt sind solche, die wenig bis keine polyaromatischen Kohlenwasserstoffe enthalten. Geeignet sind TDAE (Treated Distillate Aromatic Extract), MES (Mild Extraction Solvate) und naphthenische Öle.

### Polybutadien (BR):

Polybutadien (BR) umfasst insbesondere zwei unterschiedliche Polybutadien-Typklassen. Die erste Klasse weist einen 1,4-cis-Gehalt von mindestens 90 % auf und wird mit Hilfe von Ziegler/Natta-Katalysatoren auf der Basis von Übergangsmetallen hergestellt. Vorzugsweise werden Katalysatorsysteme auf der Basis von Ti-, Ni-, Co- und Nd- eingesetzt (Houben-Weyl, Methoden der Organischen Chemie, Thieme Verlag, Stuttgart, 1987, Band E 20, Seiten 798 bis 812; Ullmann's Encyclopedia of Industrial Chemistry, Vol A 23, Rubber 3. Synthetic, VCH Verlagsgesellschaft mbH, D-69451 Weinheim, 1993, S. 239-364). Die Glastemperatur dieses Polybutadiens liegt bevorzugt bei ≤ -90°C (bestimmt mittels DSC).

Die zweite Polybutadien-Typklasse wird mit Li-Katalysatoren hergestellt und weist Vinylgehalte von 10% bis 90% auf. Die Glastemperaturen dieser Polybutadienkautschuke liegen im Bereich von -90°C bis +20 °C (bestimmt mittels DSC).

### Polyisopren (IR):

Polyisopren (IR) hat typischerweise einen 1,4-cis-Gehalt von mindestens 70%. Unter den Begriff IR fallen sowohl synthetisch hergestelltes 1,4-cis-Polyisopren als auch Naturkautschuk, (NR). Synthetisch wird IR sowohl mittels Lithium- als auch mit Hilfe von Ziegler/Natta-Katalysatoren hergestellt, vorzugsweise mit Titan- und Neodymkatalysatoren (Houben-Weyl, Methoden der Organischen Chemie, Thieme Verlag, Stuttgart, 1987, Band E 20, Seiten 822 bis 840; Ullmann's Encyclopedia of Industrial Chemistry, Vol. A 23, Rubber 3. Synthetic, VCH Verlagsgesellschaft mbH, D-69451 Weinheim, 1993, S. 239-364). Vorzugsweise wird Naturkautschuk eingesetzt.

Auch 3,4-Polyisopren, das Glastemperaturen im Bereich von -30 bis +30 °C aufweist, fällt unter IR.

### Komponente b) mindestens ein bi- oder polycyclisches Amin

**Bi- bzw. polycyclische Amine** sind dem Fachmann prinzipiell bekannt und entweder käuflich erhältlich oder aber nach dem Fachmann hinlänglich bekannten Methoden herstellbar. Hierbei können beispielsweise aliphatische gesättigte oder ungesättigte bi- oder polycyclische Amine, bevorzugt aliphatische gesättigte oder ungesättigte bi- oder polycyclische tertiäre Amine eingesetzt werden. Insbesondere sind die folgenden bi- oder polycyclischen Amine der Formeln (I) oder (II) geeignet: 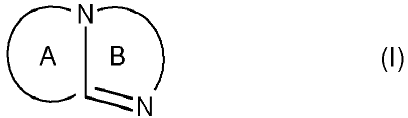 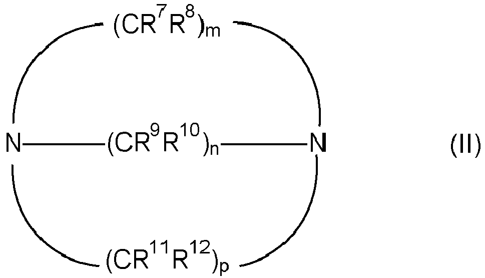 worin
- A: für einen aliphatischen, unsubstituierten oder substituierten, gegebenenfalls eine Doppelbindung aufweisenden, 4 bis 8 gliedrigen heterocyclischen Ring steht, bevorzugt für einen unsubstituierten 5 bis 7 gliedrigen heterocyclischen Ring, der 1 oder 2 N-Atome und aufweist;
- B: für einen aliphatischen unsubstituierten oder substituierten, gegebenenfalls eine Doppelbindung aufweisenden, 4 bis 8 gliedrigen heterocyclischen Ring steht, bevorzugt für einen unsubstituierten, eine Doppelbindung aufweisenden, 5 bis 6 gliedrigen heterocyclischen Ring, der 2 N-Atome aufweist;
- R⁷, R⁸, R⁹, R¹⁰, R¹¹ und R¹²: gleich oder verschieden sind und für H oder aliphatische Reste mit 1 bis 4 Kohlenstoffatomen stehen, bevorzugt H, Methyl, Ethyl, n-Propyl, Isopropyl, n-Butyl, sec.-Butyl, Isobutyl oder tert.-Butyl, besonders bevorzugt H, und
- m, n und p: gleich oder verschieden sind und 1, 2, 3 oder 4, bevorzugt 1 oder 2, besonders bevorzugt 2 bedeuten.

Besonders bevorzugte bi- oder polycyclische Amine sind die nachfolgenden der Formeln (I-1), (I-2), (I-3), (I-4) und (II-1):
**DBU:** 1,8-Diazabicyclo[5.4.0]undecen-7 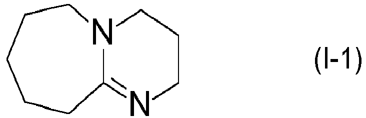
**DBN:** 1,5-Diazabicyclo[4.3.0]-nonen-5 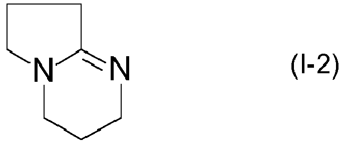
**TBD** 1,5,7-Triazabicyclo[4.4.0]dec-5-en 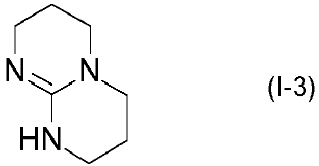
**MTBD** 7-Methyl-1,5,7-triazabicyclo[4.4.0]dec-5-en 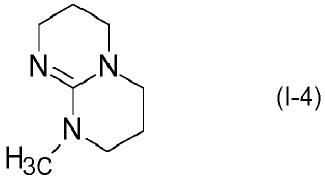
**DABCO:** 1,4-Diazabicyclo[2.2.2]octan

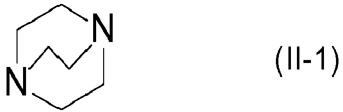

In der erfindungsgemäßen Kautschukmischung wird mindestens ein bi- bzw. polycyclisches Amin in einer Menge von 0,1 bis 5,0 Gew.-Teilen, vorzugsweise 0,2 bis 4,0 Gew.-Teilen, besonders bevorzugt 0,25 bis 3,5 Gew.-Teilen und insbesondere 0,25 bis 1,5 Gew.-Teile, bezogen auf 100 Gew.-Teile der Komponente a) eingesetzt. Sofern zwei oder mehr bi- bzw. polycyclische Amine b) eingesetzt werden, stellt die zuvor genannte Menge die Gesamtmenge dieser dar. Werden zwei oder mehr Kautschuke als Komponente a) eingesetzt, so dient die Summe aller Kautschuke als Basis für die vorgenannten Angaben in Gew.-Teilen. Dies gilt im Folgenden auch für alle anderen Mengenangaben für die übrigen Komponenten der erfindungsgemäßen Mischung.

### Komponente c): Schwefel und Schwefelspender

In den erfindungsgemäßen Kautschukmischungen wird als Vernetzer entweder Schwefel in Form elementaren Schwefels und/oder mindestens ein Schwefelspender eingesetzt. Elementarer Schwefel wird als löslicher oder unlöslicher Schwefel eingesetzt.

Unter löslichem Schwefel versteht man die bei gewöhnlichen Temperaturen einzige stabile Form, den gelben Cyclooctaschwefel (S₈) oder α-S, die aus typischen rhombischen Kristallen besteht und in Schwefelkohlenstoff hoch löslich ist. So lösen sich bei 25 °C in 100 g CS₂ 30 g α-S (Stichwort "Schwefel" des online Römpp Chemie Lexikons, Stand August 2004, Georg Thieme Verlag Stuttgart).

Unter unlöslichem Schwefel versteht man eine Schwefelmodifikation, die nicht zum sogenannten Ausblühen an der Oberfläche von Kautschukmischungen neigt. Diese spezielle Schwefelmodifikation ist zu 60 - 95 % in Schwefelkohlenstoff unlöslich.

Beispiele für Schwefelspender sind Caprolactam Disulfid (CLD), Dithiomorpholin (DTDM) oder 2-(4-Morpholinodithio)benzothiazol (MBSS). (W. Hoffmann "Kautschuktechnologie", S. 254 ff, Gentner Verlag Stuttgart (1980))

Schwefel und/oder Schwefelspender werden in der erfindungsgemäßen Kautschukmischung in einer Menge im Bereich von 0,1 bis 15 Gew.-Teilen, bevorzugt 0,1-10 Gew.-Teilen, bezogen auf 100 Gew.-Teile der Komponente(n) a) eingesetzt.

Die erfindungsgemäßen Kautschukmischungen enthalten keine Vernetzer auf Basis eines Bi- oder Polyamins, wobei unter Bi- bzw. Polyamin jede Verbindung zu verstehen ist, die entweder zwei oder mehr Aminogruppen enthält oder aber während der Vernetzungsreaktion in-situ eine Verbindung mit zwei oder mehr Aminogruppen bildet (wie z.B. aus Carbamat-Strukturen oder aus Hydrazid-Strukturen der Form "-C(=O)NHNH₂").

### Komponente d): Vulkanisationsbeschleuniger

In der erfindungsgemäßen Kautschukmischung kommt ferner mindestens ein weiterer Vulkanisationsbeschleuniger zum Einsatz, der von dem/den bi- bzw. polycyclischen Aminen (Komponente b)) verschieden ist und für die Schwefelvulkanisation geeignet ist.

Entsprechende Vulkanisationsbeschleuniger sind in J. Schnetger "Lexikon der Kautschuktechnik" 3. Auflage, Hüthig Verlag Heidelberg, 2004, Seiten 514-515, 537-539 und 586-589 erwähnt.

Im Rahmen der vorliegenden Erfindung können die Vulkanisationsbeschleuniger d) beispielsweise ausgewählt werden aus der Gruppe der Xanthogenate, Dithiocarbamate, Tetramethylthiuramdisulfide, Thiurame, Thiazole, Thioharnstoff-Derivate, Amin-Derivate wie Tetramine, Sulfenimide, Piperazine, Amincarbamate, Sulfenamide, Dithiophosphorsäure-Derivate, Bisphenol- und Triazin-Derivate.

Geeignete Vulkanisationsbeschleuniger sind Benzothiazyl-2-cyclohexyl-sulfenamid (CBS), Benzo-thiazyl-2-tert.-butylsulfenamid (TBBS), Benzothiazyl-2-dicyclohexylsulfenamid (DCBS), 1,3-Diethylthioharnstoff (DETU), 2-Mercaptobenzothiazol (MBT) und dessen Zinksalze (ZMBT), Kupfer-dimethyldithiocarbamat (CDMC), Benzothiazyl-2-sulfenmorpholid (MBS), Benzothiazyldicyclohexylsulfenamid (DCBS), 2-Mercaptobenzothiazoldisulfid (MBTS), Dimethyldiphenylthiuramdisulfid (MPTD), Tetrabenzylthiuramdisulfid (TBZTD), Tetramethylthiorammonosulfid (TMTM), Dipentamethylenthiuramtetrasulfid (DPTT), Tetra-iso-butylthiuramdisulfid (IBTD), Tetraethylthiuramdisulfid (TETD), Tetramethylthiuramdisulfid (TMTD), Zink-N-dimethyl-dithiocarbamat (ZDMC), Zink-N-diethyldithiocarbamat (ZDEC), Zink-N-dibutyl-dithiocarbamat (ZDBC), Zink-N-ethylphenyldithiocarbamat (ZEBC), Zinkdibenzyldithiocarbamat (ZBEC), Zinkdiisobutyldithiocarbamat (ZDiBC), Zink-N-pentamethylendithiocarbamat (ZPMC), Zink-N-ethylphenyldithiocarbamat (ZEPC), Zink-2-Mercaptobenzothiazol (ZMBT), Ethylenthioharnstoff (ETU), Tellurdiethyldithiocarbamat (TDEC), Diethylthioharnstoff (DETU), N,N-Ethylenthioharnstoff (ETU), Diphenylthioharnstoff (DPTU), Triethyltrimethyltriamin (TTT); N-t-Butyl-2-benzothiazol-sulfenimid (TBSI); 1,1'-Dithiobis(4-methylpiperazin); Hexamethylendiamincarbamat (HMDAC); Benzothiazyl-2tert.-butylsulfenamid (TOBS), N,N'-Diethylthiocarbamyl-N'-cyclohexylsulfenamid (DETCS), N-Oxidiethylendithiocarbamyl-N'-oxydiethylensulfenamid (OTOS), 4,4'-Dihydroxydiphenylsulfon (Bisphenol S), Zn-isopropylxanthogenat (ZIX), Selen-, Tellur-, Blei-, Kupfer- und Erdalkalisalze von Dithiocarbaminsäuren; Pentamethylenammonium-N-pentamethylendithiocarbamat; Dithiophosphorsäurederivate; Cyclohexylethylamin; Dibutylamin; Polyethylenpolyamine und Polyethylenpolyimine wie z.B. Triethylentetramin (TETA).

Die Vulkanisationsbeschleuniger der Komponente d) werden bevorzugt in einer Menge im Bereich von 0,1 bis 15 Gew.-Teilen, bevorzugt 0,1-10 Gew.-Teilen, bezogen auf 100 Gew.-Teile der Komponente(n) a) eingesetzt.

Die erfindungsgemäßen Kautschukmischungen enthalten bevorzugt einen Vulkanisations-beschleuniger als Komponente d). Es können aber auch mehrere Vulkanisationsbeschleuniger als Komponenten d) eingesetzt werden.

### Komponente e): Zinkoxid und Stearinsäure und/oder Zinkstearat

In der erfindungsgemäßen Kautschukmischung ist in einer Ausführungsform Zinkoxid als Aktivator für die Schwefelvulkanisation enthalten. Die Auswahl einer geeigneten Menge ist dem Fachmann ohne großen Aufwand möglich. Wird das Zinkoxid in einer etwas höheren Dosierung eingesetzt, so führt dies zu einer vermehrten Ausbildung monosulfidischer Bindungen und damit zu einer verbesserten Alterungsbeständigkeit.

Die erfindungsgemäße Kautschukzusammensetzung enthält ferner in der vorstehend genannten Ausführungsform neben Zinkoxid Stearinsäure (Octadecansäure). Diese ist dem Fachmann dafür bekannt, dass sie in der Kautschuktechnologie ein breites Wirkungsspektrum besitzt. So besteht eine ihrer Wirkungen darin, dass sie zu einer verbesserten Dispersion der Vulkanisationsbeschleuniger führt. Ferner kommt es zu einer Komplexbildung mit Zinkionen im Rahmen der Schwefelvulkanisation.

Zinkoxid wird in der erfindungsgemäßen Zusammensetzung in der vorstehend genannten Ausführungsform in einer Menge von 0,5 bis 15 Gew.-Teilen, bevorzugt 1 bis 7,5 Gew.-Teilen, besonders bevorzugt 1 bis 5 Gew.%, bezogen auf 100 Gew.-Teile der Komponente(n) a) eingesetzt.

Stearinsäure wird in der erfindungsgemäßen Zusammensetzung in der vorstehend genannten Ausführungsform in einer Menge von 0,1 bis 7, bevorzugt 0,25 bis 7 Gew.-Teilen, bevorzugt 0,5 bis 5 Gew.-Teilen, bezogen auf 100 Gew.-Teile der Komponente(n) a) eingesetzt.

In einer weiteren Ausführungsform kann alternativ oder aber auch zusätzlich zur Kombination aus Zinkoxid und Stearinsäure Zinkstearat eingesetzt werden. In diesem Fall wird üblicherweise eine Menge an Zinkstearat von 0,25 bis 5 Gew.-Teilen, bevorzugt 1 bis 3 Gew.-Teile, jeweils bezogen auf 100 Gew.-Teile der Komponente(n) a) verwendet.

### Komponente f): Füllstoffe

Die erfindungsgemäße Kautschukmischung enthält mindestens einen Füllstoff. Füllstoffe sind dem Fachmann bekannt und käuflich erhältlich. Geeignete Füllstoffe sind z.B. Kieselsäure, Ruß, Silikate, Oxide und organische Füllstoffe, welche in den erfindungsgemäßen Mischungen bevorzugt verwendet werden.

Der oder die Füllstoffe werden in der erfindungsgemäßen Zusammensetzung typischerweise in einer Menge von 5 bis 300 Gew.-Teilen, bevorzugt von 10 bis 200 Gew.-Teilen und besonders bevorzugt von 20 bis 150 Gew.-Teilen, jeweils bezogen auf 100 Gew.-Teile der Komponente(n) a) eingesetzt. Die optimale Menge hängt ab von der Art des verwendeten Füllstoffs und der gewünschten Anwendung. Ein Fahrradreifen erfordert einen geringeren Verstärkungsgrad als ein Luftreifen für Personenkraftwagen oder Nutzfahrzeuge wie Lastkraftwagen.

Wird Kieselsäure oder "Silica" (Ullmann's Encyclopedia of Industrial Chemistry, VCH Verlagsgesellschaft mbH, D-69451 Weinheim, 1993, "Silica", S.635-645) verwendet, so handelt es sich um pyrogene (ibid. S. 635-642) oder um Fällungskieselsäure (ibid. 642-645). Fällungskieselsäuren werden durch Behandlung von Wasserglas mit anorganischen Säuren erhalten, wobei vorzugsweise Schwefelsäure eingesetzt wird. Die Kieselsäuren können gegebenenfalls auch als Mischoxide mit anderen Metalloxiden, wie Al-, Mg-, Ca-, Ba-, Zn-, Zr-, Ti-Oxiden vorliegen. Bevorzugt sind Fällungskieselsäuren mit spezifischen Oberflächen von 5 bis 1000 m²/g, vorzugsweise von 20 bis 400 m2/g, jeweils bestimmt nach BET. Für die Herstellung von Reifenlaufflächen mit geringem Rollwiderstand sind hochdispergierbare Fällungskieselsäuren bevorzugt. Beispiele für bevorzugte hochdispergierbare Kieselsäuren schließen beispielsweise ein: Perkasil® KS 430 (AKZO), BV 3380 und Ultrasil®7000 (Evonik-Degussa), Zeosil® 1165, MP 1115 MP und HRS 1200 MP (Rhodia), Hi-Si1 2000 (PPG), Zeopol® 8715, 8741 oder 8745 (Huber), Vulkasil® S, N und C von Lanxess und behandelte Fällungskieselsäuren wie beispielsweise mit Aluminium "dotierte" Kieselsäuren, die in der EP-A-0 735 088 beschrieben sind. Ein oder mehrere Kieselsäuretypen können verwendet werden.

Bevorzugt werden erfindungsgemäß Kieselsäuren mit spezifischen Oberflächen von 5 bis 1000 m²/g, bevorzugter 20 bis 400 m²/g, jeweils bestimmt nach BET, eingesetzt.

Kieselsäure wird üblicherweise in einer Menge von größer 0 bis 150 Gew.-Teilen, bevorzugt 1 bis 120 Gew.-Teilen, besonders bevorzugt 5 bis 100 Gew.-Teilen, bezogen auf 100 Gew.-Teile der Komponente(n) a) eingesetzt.

In den erfindungsgemäßen Kautschukmischungen eingesetzte Ruße sind dem Fachmann ebenfalls bekannt (siehe Stichworte "carbon" bzw. "carbon black" in Ullmann's Encyclopedia of Industrial Chemistry, VCH Verlagsgesellschaft mbH, D-69451 Weinheim, 1993, vol A 5 S.95-158). Sie werden bevorzugt nach dem gas black-, furnace black-, lamp black- und thermal black- Verfahren hergestellt und werden nach der neuen ASTM-Nomenklatur **(ASTM D 1765 und D 2516)** als N 110, N 115, N 121, N 125, N 212, N 220, N 231, N 234, N 242, N 293, N 299, S 315, N 326, N 330, N 332, N 339, N 343, N 347, N 351, N 375, N 472, N 539, N 550, N 582, N 630, N642, N 650, N 660, N 683, N 754, N 762, N 765, N 772, N 774, N 787, N 907, N 908 N 990, N 991 S 3 etc. bezeichnet. Die erfindungsgemäß verwendeten Ruße besitzen bevorzugt BET-Oberflächen zwischen 5 bis 200 m²/g.

Ruß wird in der erfindungsgemäßen Zusammensetzung üblicherweise in einer Menge von 0 bis 150 Gew.-Teilen, bevorzugt größer 0 bis 150 Gew.-Teilen, besonders bevorzugt von 1 bis 120 Gew.-Teilen und ganz besonders bevorzugt von 5 bis 100 Gew.-Teilen, bezogen auf 100 Gew.-Teile der Komponente(n) a) eingesetzt.

Weitere Füllstoffe, die eingesetzt werden können, sind:
- synthetische Silikate, wie Aluminiumsilikat, Erdalkalisilikat, wie Magnesiumsilikat oder Calciumsilikat mit BET-Oberflächen von 20-400 m²/g und Primärteilchendurchmessern von 5-400 nm
- natürliche Silikate, wie Kaolin, Kieselgur und andere natürlich vorkommende Kieselsäuren,
- Metalloxide, wie Aluminiumoxid, Magnesiumoxid , Calciumoxid,
- Metallcarbonate, wie Calciumcarbonat, Magnesiumcarbonat, Zinkcarbonat,
- Metallsulfate, wie Calciumsulfat, Bariumsulfat,
- Metallhydroxide, wie Aluminiumhydroxid und Magnesiumhydroxid,
- Glasfasern und Glasfaserprodukte (Latten, Stränge oder Mikroglaskugeln),
- Thermoplaste (Polyamid, Polyester, Aramid, Polycarbonat, syndiotaktisches 1,2 Polybutadien und trans-1,4-Polybutadien) sowie
- Cellulose, Cellulosederivate und Stärke.

Aluminiumoxid kann beispielsweise als hochdispergierbares Aluminiumoxid wie in der EP-A-0 810 258 beschrieben eingesetzt werden. Beispiele schließen ein: Al25 oder CR125 (Baikowski), APA-1OORDX (Condea), Aluminiumoxid C (Degussa) und AKP-GO 15 (Sumitomo Chemicals).

### Komponente g) (Optional): schwefelhaltige siliciumorganische Verbindungen

Falls die Kautschukmischung hydroxylhaltige Füllstoffe wie Kieselsäure enthält, ist es für die Erzielung einer guten Füllstoffverteilung und einer guten Ankopplung an die Kautschukmatrix vorteilhaft, bei der Herstellung der Mischung schwefelhaltige siliciumorganische Verbindungen einzusetzen. Die schwefelhaltigen siliciumorganischen Verbindungen weisen folgende Strukturelemente auf:
- ein siliciumorganisches Strukturelement, insbesondere eine Alkoxysilyl-, bevorzugt eine Trialkoxysilylgruppe,
- ein schwefelhaltiges Strukturelement, insbesondere einen Sulfid- oder Polysulfidrest Sₓ, worin x im Mittel etwa 1 bis 10, bevorzugt 1 bis 6 sein kann,
- eine zweiwertige sogenannte Spacergruppe Q, die das silicumorganische Strukturelement mit dem schwefelhaltigen Strukturelement verbindet.

Als schwefelhaltigen Organosiliciumverbindungen kommen insbesondere solche der folgende Grundstrukturen (III) und (IV) in Betracht: 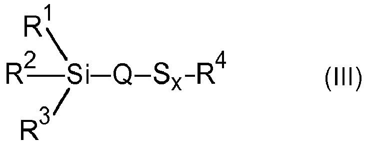 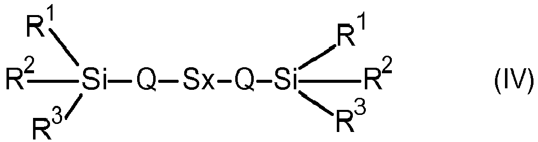 worin
- x: im Mittel 1 bis 10, bevorzugt 1 bis 6 sein kann,
- R¹, R² und R³: gleiche oder verschiedene Alkoxygruppen, bevorzugt gleiche oder verschiedene C₁-C₁₀-Alkoxygruppen, bedeuten,
- Q: eine Spacergruppe darstellt, bevorzugt auf der Basis von aliphatischen, heteroaliphatischen, aromatischen oder heteroaromatischen Kohlenstoffketten mit 1 bis 20 Kohlenstoffatomen, bevorzugt 1 bis 10 Kohlenstoffatomen, und optional 1 bis 3 Heteroatomen, insbesondere Sauerstoff, Schwefel oder Stickstoff,
- R⁴: Wasserstoff, geradkettiges oder verzweigtes Alkyl, wobei die Alkylkette optional durch ein oder mehrere, bevorzugt bis zu fünf Heteroatome, insbesondere Sauerstoff, Schwefel oder N(H), unterbrochen sein kann, Aryl, bevorzugt C₆-C₂₀-Aryl und/oder einen Rest darstellt mit nachfolgenden Strukturen: 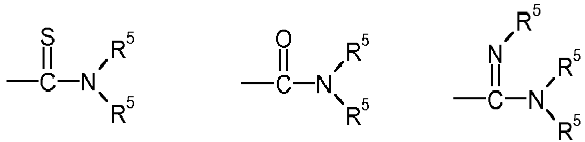 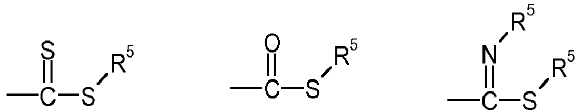 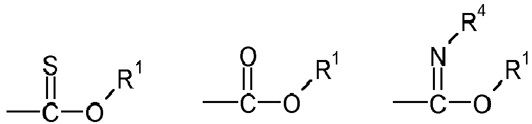 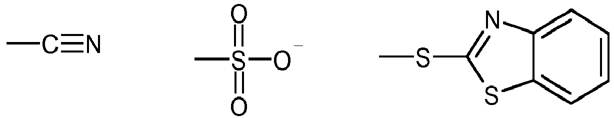 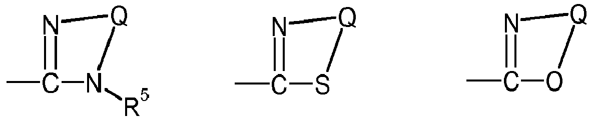
worin
R⁵ für einen aliphatischen, heteroaliphatischen, cycloaliphatischen, aromatischen oder heteroaromatischen Rest mit 1 bis 20, bevorzugt 1 bis 10, Kohlenstoffatomen und 1 bis 3 Heteroatomen, wie Sauerstoff, Stickstoff oder Schwefel steht.

Bevorzugte schwefelhaltige Organosiliciumverbindungen sind Bis(tri-ethoxy-silyl-propyl)-polysulfane der Formel (V): 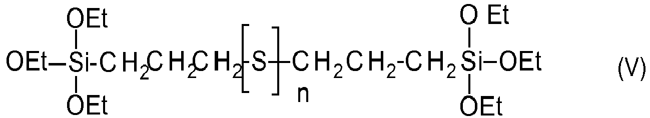 mit n = 2 bis 4. Solche Produkte sind kommerziell unter dem Namen Silan Si 75 (n = 2) und als Silan Si 69 (n = 4) der Evonik Industries AG verfügbar.

Die schwefelhaltigen siliciumorganischen Verbindungen werden, wenn sie eingesetzt werden, zweckmäßig in Gesamtmengen von im Allgemeinen 0,2 Gew.-Teilen bis 12 Gew.-Teilen, bevorzugt 0,5 bis 10 Gew.-Teilen, bezogen auf 100 Gew.-Teile der Komponente(n) a), eingesetzt.

### h) Optional: weitere Additive

Optional als Komponente(n) h) der erfindungsgemäßen Zusammensetzung zuzusetzende Kautschukadditive umfassen Alterungsschutzmittel, Reversionsschutzmittel, Lichtschutzmittel, Ozonschutzmittel, Verarbeitungshilfsmittel, Weichmacher, Mineralöle, Tackifier, Treibmittel, Farbstoffe, Pigmente, Wachse, Harze, Streckmittel, organische Säuren, Vulkanisationsverzögerer, Metalloxide, sowie weitere Füllstoffaktivatoren, wie beispielsweise Triethanolamin, Trimethylolpropan, Polyethylenglykol, Hexantriol, aliphatische Trialkoxysilane oder anderen Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als **Vulkanisationsverzögerer** können den erfindungsgemäßen Zusammensetzungen beispielsweise Sulfonamide, Sulfanilide oder Phthalimide zugesetzt werden. Geeignet sind z.B. N-Trichlormethylsulfenylbenzolsulfanilid, N-Cyclohexylthiophthalimid, Phtalsäureanhydrid (PTA), Salicylsäure (SAL), N-Nitrosodiphenylamin (NDPA), Trichlormelamin (TCM), Maleinsäureanhydrid (MSA) und N-Trichlormethylsulfenylbenzolsulfanilid (letzteres kommerziell unter der Bezeichnung Vulkalent® E erhältlich). Entsprechende Vulkanisationsverzögerer sind ebenfalls in J. Schnetger, "Lexikon der Kautschuktechnik", 3. Auflage, Hüthig Verlag, Heidelberg, 2004, Seite 590 erwähnt.

Als **Antioxidantien** können in den erfindungsgemäßen Zusammensetzungen beispielsweise Mercaptobenzimidazol (MBI), 2-Mercaptomethylbenzimidazol (2-MMBI), 3-Mercaptomethylbenzimidazol (3-MMBI), 4-Mercaptomethylbenzimidazol (4-MMBI), 2,2,4-Trimethyl-1,2-dihydrochinlin (TMQ), Nickel-dibutyldithiocarbamat (NDBC), 2,6-Di-tert.-butyl-p-kresol (BHT) und 2,2'-Methylen-bis(4-methyl-6tert.butyl-phenol) (BKF) eingesetzt werden. Diese Antioxidantien können auch in nichtstaubenden, insbesondere auch polymergebundenen Lieferformen eingesetzt werden (als "Microgranulat" (MG) oder "Microgranulat coated" (MGC)).

Als Beschleunigeraktivatoren können den erfindungsgemäßen Zusammensetzungen beispielsweise Triallylcyanurat (TAC) und N,N'Phenylendimaleimid (HVA-2) zugesetzt werden.

Darüber hinaus sind auch **Alterungsschutzmittel** als Komponente(n) h) einsetzbar, beispielsweise in Form verfärbender Alterungsschutzmittel mit Ermüdungs- und Ozonschutzwirkung, z.B. N-Isopropyl-N'-phenyl-p-phenylen-diamin (IPPD); verfärbender Alterungsschutzmittel mit Ermüdungsschutz, aber ohne Ozonschutzwirkung, z.B. Phenyl-α-naphthylamin (PAN); verfärbender Alterungsschutzmittel mit geringer Ermüdungs- und ohne Ozonschutzwirkung, z.B. octyliertes Diphenylamin (ODPA); nicht verfärbender Alterungsschutzmittel mit Ermüdungsschutz und gutem Hitzeschutz, z.B. styrolisierte Phenole (SPH); nicht verfärbender Alterungsschutzmittel ohne Ermüdungs- oder Ozonschutzwirkung, z.B. 2,6-Di-tert.-butyl-p-kresol (BHT); nicht verfärbender Ozonschutzmittel ohne Alterungsschutzwirkung, z.B. Wachse (Gemische aus speziellen Kohlenwasserstoffen), cyclischer Acetale und Enolether; und in Form von Hydrolyseschutzmitteln, wie z.B. Polycarbodiimiden.

Ferner können den erfindungsgemäßen Zusammensetzungen auch Mastikationschemikalien zugesetzt werden, welche vorzugsweise ausgewählt werden aus der Gruppe bestehend aus Thiophenolen, Thiophenolzinksalzen, substituierten aromatischen Disulfiden, Peroxiden, Derivaten von Thiocarbonsäuren, Hydrazinderivaten, Nitrosoverbindungen und Metallkomplexen, besonders bevorzugt Eisenhemiporphyrazin, Eisenphthalocyanin, Eisenacetonylacetat und dessen Zn-Salz.

Die als Komponente(n) h) verwendbaren Additive werden in üblichen Mengen, die sich u.a. nach dem Verwendungszweck richten, eingesetzt. Übliche Mengen für einzelne Additive liegen beispielsweise bei 0,1 Gew.-Teilen bis 50 Gew.-Teilen, bezogen auf 100 Gew.-Teile der Komponente(n) a).

In einer bevorzugten Ausführungsform enthält die erfindungsgemäße Kautschukmischung neben den Komponenten a) bis e)
f) Kieselsäure als mindestens einen Füllstoff und
g) mindestens eine schwefelhaltige siliciumorganische Verbindung.

In einer besonders bevorzugten Ausführungsform enthält die erfindungsgemäße Kautschukmischung neben den Komponenten a) bis e)
f) Kieselsäure als Füllstoff und
g) mindestens eine schwefelhaltige siliciumorganische Verbindung mit einer der folgenden Grundstrukturen (III) oder (IV) 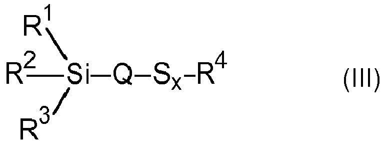 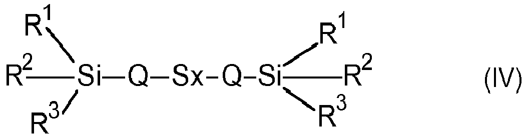 worin
   - x: im Mittel 1 bis 10, bevorzugt 1 bis 6 sein kann,
   - R¹, R² und R³: gleiche oder verschiedene Alkoxygruppen, bevorzugt gleiche oder verschiedene C₁-C₁₀-Alkoxygruppen, bedeuten,
   - Q: eine Spacergruppe darstellt, bevorzugt auf der Basis von aliphatischen, heteroaliphatischen, aromatischen oder heteroaromatischen Kohlenstoffketten mit 1 bis 20 Kohlenstoffatomen, bevorzugt 1 bis 10 Kohlenstoffatomen, und optional 1 bis 3 Heteroatomen, insbesondere Sauerstoff, Schwefel oder Stickstoff,
   - R⁴: Wasserstoff, geradkettiges oder verzweigtes Alkyl, wobei die Alkylkette optional durch ein oder mehrere, bevorzugt bis zu fünf Heteroatome, insbesondere Sauerstoff, Schwefel oder N(H), unterbrochen ist, Aryl, bevorzugt C₆-C₂₀-Aryl und/oder einen Rest darstellt mit nachfolgenden Strukturen: 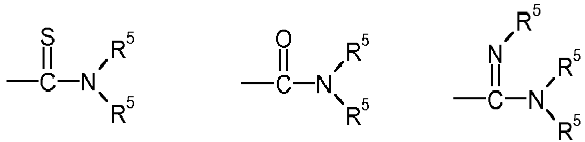 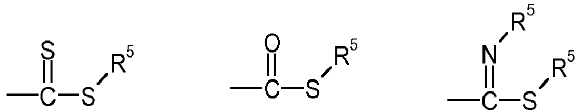 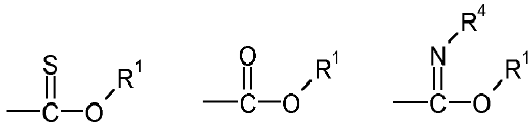 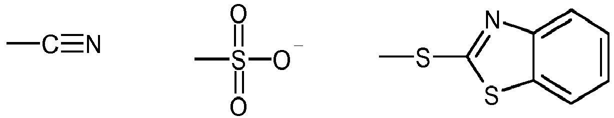 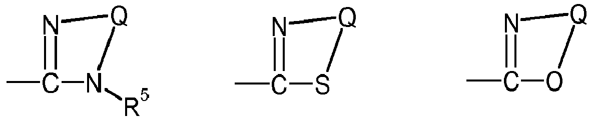 worin
   R⁵ für einen aliphatischen, heteroaliphatischen, cycloaliphatischen, aromatischen oder heteroaromatischen Rest mit 1 bis 20, bevorzugt 1 bis 10, Kohlenstoffatomen und mit optional 1 bis 3 Heteroatomen, vorzugsweise Sauerstoff, Stickstoff oder Schwefel steht.

Insbesondere bevorzugt ist eine Kautschukmischung mit den Komponenten a) bis e) sowie enthaltend
f) Kieselsäure als Füllstoff und
g) mindestens einem Bis(tri-ethoxy-silyl-propyl)-polysulfan der Formel (V) mit n= 2-4

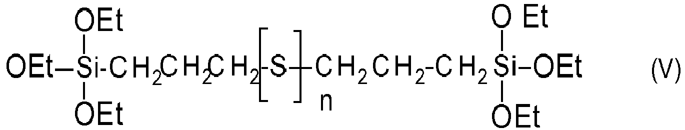

In einer weiteren Ausführungsform handelt es sich um eine Kautschukmischung enthaltend
a) mindestens einen doppelbindungshaltigen Kautschuk,
b) 0,1 bis 5,0 Gew.-Teile, vorzugsweise 0,2 bis 4,0 Gew.-Teile, besonders bevorzugt 0,25 bis 3,5 Gew.-Teile mindestens eines bi- oder polycyclischen Amins,
c) 0,1 bis 15 Gew.-Teile, bevorzugt 0,1-10 Gew.-Teile Schwefel oder mindestens eines Schwefelspenders,
d) 0,1 bis 15 Gew.-Teile, bevorzugt 0,1-10 Gew.-Teile mindestens eines Vulkanisationsbeschleunigers, der von Komponente b) verschieden ist,
e) 0,5 bis 15 Gew.-Teile, bevorzugt 1 bis 7,5 Gew.-Teile Zinkoxid und 0,1 bis 7 Gew.-Teile, bevorzugt 0,25 bis 7 Gew.-Teile Stearinsäure, und zusätzlich oder alternativ zum Zinkoxid und Stearinsäure 0,25 bis 5 Gew.-Teile, bevorzugt 1 bis 3 Gew.-Teile Zinkstearat und
f) 5 bis 300 Gew.-Teile, bevorzugt 10 bis 200 Gew.-Teile und besonders bevorzugt 20 bis 150 Gew.-Teile mindestens eines Füllstoffs,
wobei alle vorgenannten Angaben in Gew.-Teilen jeweils auf 100 Gewichtsteile der Kautschukkomponente(n) a) bezogen sind und wobei diese Kautschukmischung keinen Vernetzer enthält, der zwei oder mehr Aminogruppen aufweist oder aber im Rahmen einer Vernetzung zwei oder mehr Aminogruppen in-situ freisetzen kann.

In einer besonders bevorzugten Ausführungsform handelt es sich um eine Kautschukmischung enthaltend
a) mindestens einen doppelbindungshaltigen Kautschuk,
b) 0,1 bis 5,0 Gew.-Teile, vorzugsweise 0,2 bis 4,0 Gew.-Teile, besonders bevorzugt 0,25 bis 3,5 Gew.-Teile mindestens eines aliphatischen gesättigten oder ungesättigten bi- oder polycyclischen Amins ausgewählt aus der Gruppe bestehend aus 1,8-Diazabicyclo[5.4.0]undecen-7 (DBU), 1,5-Diazabicyclo[4.3.0]-nonen-5 (DBN), 1,4-Diazabicyclo[2.2.2]octan (DABCO), 1,5,7-Triazabicyclo[4.4.0]decen-5 (TBD) und 7-Methyl-1,5,7-triazabicyclo[4.4.0]decen-5 (MTBD),
c) 0,1 bis 15 Gew.-Teile, bevorzugt 0,1-10 Gew.-Teile Schwefel oder mindestens eines Schwefelspender,
d) 0,1 bis 15 Gew.-Teile, bevorzugt 0,1-10 Gew.-Teile mindestens eines Vulkanisationsbeschleunigers, der von Komponente b) verschieden ist,
e) 0,5 bis 15 Gew.-Teile, bevorzugt 1 bis 7,5 Gew.-Teile Zinkoxid und 0,1 bis 7 Gew.-Teile, bevorzugt 0,25 bis 7 Gew.-Teile Stearinsäure, und zusätzlich oder alternativ zum Zinkoxid und Stearinsäure 0,25 bis 5 Gew.-Teile, bevorzugt 1 bis 3 Gew.-Teile Zinkstearat und
f) 5 bis 300 Gew.-Teile, bevorzugt 10 bis 200 Gew.-Teile und besonders bevorzugt 20 bis 150 Gew.-Teile mindestens eines Füllstoffs, bevorzugt Kieselsäure und
g) 0,5 bis 10 Gew.-Teile, bevorzugt 1 bis 8 Gew.-Teile mindestens einem Bis(tri-ethoxy-silyl-propyl)-polysulfan der Formel (V) mit n= 2-4 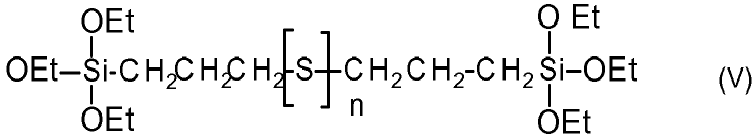
wobei alle vorgenannten Angaben in Gew.-Teilen jeweils auf 100 Gewichtsteile der Kautschukkomponente a) bezogen sind und wobei diese Kautschukmischung keinen Vernetzer enthält, der zwei oder mehr Aminogruppen aufweist oder aber im Rahmen einer Vernetzung zwei oder mehr Aminogruppen in-situ freisetzen kann.

### Herstellung der erfindungsgemäßen Kautschukmischung:

Die Herstellung der erfindungsgemäßen Kautschukmischung erfolgt durch Mischen der Komponenten a) bis f) und optional g) und optional h). Das Mischen kann in einer oder mehreren Stufen erfolgen. Bewährt hat sich zum Beispiel ein dreistufiger Mischprozess mit zwei Mischstufen im Innenmischer und einer abschließenden Mischstufe auf einer Walze (sogenannte "Fertigmischstufe"). Möglich ist auch ein zweistufiger Mischprozess, bei dem die 1. Mischstufe im Innenmischer und die 2. Mischstufe auf einer Walze erfolgt. Ebenso möglich ist ein zweistufiger Mischprozess, bei dem beide Mischstufen in einem Innenmischer erfolgen.

Bei dem zweistufigen Mischprozess wird die Mischung zum Beispiel vor der Zugabe derjenigen Komponenten, die ansonsten üblicherweise auf der Walze zugegeben werden, auf Temperaturen < 120°C, vorzugsweise <110°C abgekühlt.

Die Zugabe der Komponente b) in Form der bi- oder polycyclischen Amine kann bei einem dreistufigen Mischen in der ersten Stufe und/oder in der zweiten Stufe und/oder in der dritten Stufe, der sogenannten "Fertigmischstufe" erfolgen. Bevorzugt ist die Zugabe in der ersten Stufe. Bewährt hat sich außerdem die Abkühlung und Lagerung der Mischung zwischen jeweils zwei Mischstufen. Bezüglich der Komponente d) hat es sich bewährt, diese erst gegen Ende des Mischvorgangs zuzugeben.

Geeignete Aggregate für die Mischungsherstellung sind an sich bekannt und schließen z.B. Walzen, Innenmischer oder auch Mischextruder ein.

Bei Anwendung eines zweistufigen Mischverfahrens im Innenmischer oder eines dreistufigen Mischverfahrens wie oben angegeben wird in der ersten und/oder in der zweiten, vorzugsweise in der ersten und zweiten Mischstufe bei Temperaturen von 110°C bis 180 °C, vorzugsweise 120°C bis 170°C, besonders bevorzugt 130°C bis 160°C gearbeitet, wobei die Mischzeiten bei diesen Temperaturen im Bereich von 1 bis 15 Minuten liegen und so gewählt werden, dass nicht bereits ein Vulkanisationsstart erfolgt. Die Temperaturen in der o.g. Fertigmischstufe betragen 20 bis 120°C, bevorzugt 50 bis 110 °C.

Üblicherweise erfolgt das Mischen im Innenmischer in einem Temperaturbereich von 20 bis 180°C, bevorzugt im Temperaturbereich 50 bis 160 °C oder auf einer Walze bei weniger als 100 °C. Die Wahl einer geeigneten Temperatur kann der Fachmann gemäß seiner Fachkenntnisse vornehmen, zu beachten ist, dass es beim Mischen einerseits zu einer Silanisierung der Kieselsäure und andrerseits nicht bereits zu einer verfrühten Vulkanisation kommt (Scorching).

### Verfahren zur Herstellung von Vulkanisaten:

Die Herstellung von Vulkanisaten erfolgt im Allgemeinen dadurch, dass man die erfindungsgemäßen vulkanisierbaren Kautschukmischungen einer Vernetzungsreaktion unterwirft. Die Vernetzungsreaktion erfolgt gemäß dem Fachmann bekannten Verfahren.

Die Vernetzungsreaktion der erfindungsgemäßen Zusammensetzungen erfolgt üblicherweise bei einer Temperatur im Bereich von 100 bis 250°C, bevorzugt von 130 bis 180°C, im Allgemeinen bei einem Druck von 1 bar (Normaldruck) bis 100 bar. Typischerweise erfolgt diese Vernetzungsreaktion im Rahmen eines Formgebungsverfahrens.

Die erfindungsgemäß hergestellten Zusammensetzungen eignen sich zur Herstellung verschiedener Reifenbauteile, insbesondere für Reifenlaufflächen, Subtreads, Karkassen, Seitenwänden, verstärkten Seitenwänden für Notlaufreifen und Apexmischungen sowie auch für die Herstellung von technischen Gummiartikeln wie Dämpfungselementen, Walzenbelägen, Belägen von Förderbändern, Riemen, Spinnkopsen, Dichtungen, Golfballkernen und Schuhsohlen. Besonders geeignet sind die Mischungen für die Herstellung von Reifenlaufflächen, Subtreads, Karkassen und Apexmischungen. Reifen bzw. Reifenteile schließen dabei auch beispielsweise Laufflächen von Sommer-, Winter- und All-Seasons-Reifen sowie Laufflächen von PKW- und LKW-Reifen, sowie Reifen für Rennwagen, Motorrad und Fahrrad ein.

Des Weiteren betrifft die vorliegende Anmeldung die Verwendung mindestens eines bi- oder polycyclischen Amins in Kombination mit Schwefel und/oder mindestens einem Schwefelspender als Vernetzer zur Vernetzung von Kautschukmischungen enthaltend - neben dem mindestens einem bi-oder polycyclischen Amin und Schwefel und/oder mindestens einem Schwefelspender
a) mindestens einen doppelbindungshaltigen Kautschuk,
d) mindestens einen Vulkanisationsbeschleuniger, der von dem bi- oder polycyclischen Amin verschieden ist,
e) Zinkoxid und Stearinsäure und/oder Zinkstearat,
f) mindestens einen Füllstoff,
g) gegebenenfalls mindestens eine schwefelhaltige siliciumorganische Verbindung, und
h) gegebenenfalls ein oder mehrere weitere Additive,
wobei diese Kautschukmischung keinen Vernetzer enthält, der zwei oder mehr Aminogruppen aufweist oder aber im Rahmen einer Vernetzung zwei oder mehr Aminogruppen in-situ freisetzen kann.

Es wurde gefunden, dass durch die Verwendung eines Vernetzungssystems umfassend mindestens ein bi- oder polycyclisches Amin und Schwefel und/oder mindestens einen Schwefelspender eine gute Vernetzung von doppelbindungshaltigen Kautschuken erzielt werden kann, unter Vermeidung des Einsatzes toxischer Guanidine.

### BEISPIELE (Vergleichsversuch VV1 sowie Beispiele 2 bis 10)

### A HERSTELLUNG DER KAUTSCHUKMISCHUNGEN

Die Kautschukmischungen wurden in einem 3stufigen Mischverfahren hergestellt, wobei für die 1. und 2. Mischstufe jeweils ein Innenmischer mit 1,5 1 Innenvolumen (GK 1,5 der Firma Werner & Pfleiderer, Stuttgart mit ineinandergreifenden Knetelementen (PS 5A -Schaufelgeometrie) eingesetzt wurde. Die letzte Mischstufe wurde auf einer Walze durchgeführt.

Die in den Mischungsserien eingesetzten Komponenten sind in den **Tabellen 1 - 3** aufgelistet. Bei allen Angaben handelt es sich um Gew.-Teile bezogen auf 100 Gew.-Teile Kautschuk. Bei der Mischungsherstellung wurde ölverstreckter Lösungs-SBR eingesetzt, wobei die Summe der entsprechenden ölfreien Kautschuke 100 Gew.-Teile ergibt. Die in den Tabellen angegebene Reihenfolge der Mischungsbestandteile entspricht der Reihenfolge der Zugabe in den Innenmischer. In den Tabellen sind außerdem die Zeitpunkte für die Zugabe der verschiedenen Komponenten aufgeführt.

Das ***Beispiel VV1*** ist ein nicht erfindungsgemäßes Vergleichsbeispiel. Bei Vergleichsbeispiel ***VV1*** wird DPG im 1. Mischschritt eingemischt, jedoch kein bi- oder polycyclisches Amin, so dass Komponente b) fehlt.

Die ***Beispiele 2, 3, 4, 5, 6, 7*, *8, 9 und 10*** sind erfindungsgemäße Beispiele, bei denen DBU als bicyclisches Amin eingesetzt wird. Wie aus der nachfolgenden Tabelle 1 ersichtlich, erfolgt der DBU-Zusatz in unterschiedlichen Mischstufen. Bei den ***erfindungsgemäßen Versuchen 2, 3, 4, 5, 6, und 7*** erfolgt der DBU-Zusatz in der 1. Mischstufe.; bei dem ***erfindungsgemäßen Versuch 8*** erfolgt der DBU-Zusatz in der 2. Mischstufe; im ***erfindungsgemäßen Beispiel 9*** wird DBU ausschließlich in der letzten **Mischstufe** (auf der Walze) eingemischt. Im ***erfindungsgemäßen Beispiel 10*** wird die Gesamtmenge an DBU zwischen der 2. und der 3. Mischstufe aufgeteilt (jeweils 50%).

Des Weiteren wurden die DBU-Mengen zwischen 0,25 und 2,3 phr variiert (***erfindungsgemäße Beispiele 2, 3, 4, 5, 6 und 7).***

In **Tabelle 1** sind die Komponenten der jeweiligen Kautschukmischungen angegeben, die in einer ersten Mischstufe in o.g. Innenmischer vermischt wurden. Die in **Tabelle 1** genannte Reihenfolge der Mischungsbestandteile entspricht der Reihenfolge der Zugabe in den Innenmischer. Außerdem sind in **Tabelle 1** die Zeitpunkte für die Zugabe der verschiedenen Komponenten aufgeführt. Nach Zugabe der letzten Komponente (Zinkoxid) wurde der Innenmischer auf 150°C aufgeheizt und 6 min. bei dieser Temperatur gehalten. Danach wurden die Mischungen ausgeworfen und zur Beschleunigung der Abkühlung auf Temperaturen <100°C kurz auf einer Walze behandelt.

**Tabelle 1: 1. Mischstufe (Innenmischer)**

| | ***Compound Nr.*** | ***VV1*** | ***2*** | ***3*** | ***4*** | ***5*** | ***6*** | ***7*** | ***8*** | ***9*** | ***10*** |
|---|---|---|---|---|---|---|---|---|---|---|---|
| **Zugabezeitpunkt: 0 sec.** | | | | | | | | | | | |
| Komponente a) | Lösungs-SBR ¹⁾ | 110 | 110 | 110 | 110 | 110 | 110 | 110 | 110 | 110 | 110 |
| Komponente a) | Polybutadien ²⁾ | 20 | 20 | 20 | 20 | 20 | 20 | 20 | 20 | 20 | 20 |

| **Zugabezeitpunkt: 30 sec.** | | | | | | | | | | | |
|---|---|---|---|---|---|---|---|---|---|---|---|
| Komponente f) | Kieselsäure ³⁾ | 53 | 53 | 53 | 53 | 53 | 53 | 53 | 53 | 53 | 53 |
| Komponente g) | Si75 ⁴⁾ | 6,4 | 6,4 | 6,4 | 6,4 | 6,4 | 6,4 | 6,4 | 6,4 | 6,4 | 6,4 |
| Komponente d) | DPG ⁵⁾ | 2,3 | - | - | - | - | - | - | - | - | - |
| alternativer Vulkanisationsbeschleuniger Komponente b) | DBU⁶⁾ | | 0,25 | 0,5 | 0,75 | 1,0 | 1,7 | 2,3 | - | - | - |
| Komponente h) | TMQ ⁷⁾ | 1 | 1 | 1 | 1 | 1 | 1 | 1 | 1 | 1 | 1 |
| Komponente h) | 6 PPD ⁸⁾ | 1 | 1 | 1 | 1 | 1 | 1 | 1 | 1 | 1 | 1 |
| Komponente e) | Stearinsäure ⁹⁾ | 1 | 1 | 1 | 1 | 1 | 1 | 1 | 1 | 1 | 1 |

| **Zugabezeitpunkt: 90 sec.** | | | | | | | | | | | |
|---|---|---|---|---|---|---|---|---|---|---|---|
| Komponente f) | Kieselsäure ³⁾ | 27 | 27 | 27 | 27 | 27 | 27 | 27 | 27 | 27 | 27 |
| Komponente f) | Ruß ¹⁰⁾ | 5 | 5 | 5 | 5 | 5 | 5 | 5 | 5 | 5 | 5 |
| Komponente h) | Mineralöl ¹¹⁾ | 7,5 | 7,5 | 7,5 | 7,5 | 7,5 | 7,5 | 7,5 | 7,5 | 7,5 | 7,5 |
| Komponente h) | Ozonwachs ¹²⁾ | 1,4 | 1,4 | 1,4 | 1,4 | 1,4 | 1,4 | 1,4 | 1,4 | 1,4 | 1,4 |

| **Zugabezeitpunkt: 150 sec.** | | | | | | | | | | | |
|---|---|---|---|---|---|---|---|---|---|---|---|
| Komponente e) | Zinkoxid ¹³⁾ | 2,5 | 2,5 | 2,5 | 2,5 | 2,5 | 2,5 | 2,5 | 2,5 | 2,5 | 2,5 |
| | Maximale Temperatur [°C] | 150 | 150 | 150 | 150 | 150 | 150 | 150 | 150 | 150 | 150 |
| | Zeit bei max. Temperatur [min.] | 6 | 6 | 6 | 6 | 6 | 6 | 6 | 6 | 6 | 6 |
| | Abkühlung und Lagerung bei 23°C [h] | 24 | 24 | 24 | 24 | 24 | 24 | 24 | 24 | 24 | 24 |

| | | | | | | | | | | | |
|---|---|---|---|---|---|---|---|---|---|---|---|
| 1) Buna® VSL 5025-1 HM der ARLANXEO Deutschland GmbH (mit 37,5 phr Mineralöl verstreckt) 2) Buna® CB 25 (Neodym-Polybutadien) der ARLANXEO Deutschland GmbH 3) Ultrasil VN3 der Evonik Industries AG 4) Bis(tri-ethoxy-silylpropyl-monosulfan) (Si 75 der Evonik Industries AG) 5) Vulkacit D/C der Lanxess Deutschland GmbH 6) Lupragen N 700 der BASF SE 7) 2,2,4-Trimethyl-1,2-dihydrochinonlin, polymerisiert (Vulkanox® HS/LG der Lanxess Deutschland GmbH) 8) N-1,3-Dimethylbutyl-N'-phenyl-p-phenylendiamin (Vulkanox® 4020/LG der Lanxess Deutschland GmbH) 9) Edenor C 18 98-100 der BASF SE 10) Corax N 234 der Evonik Industries AG 11) Tudalen 1849-1 der Hansen & Rosenthal KG 12) Antilux® 654 der Lanxess Deutschland GmbH 13) Zinkweiss Rotsiegel der Grillo Zinkoxid GmbH | | | | | | | | | | | |

Nach 24 stündiger Lagerung bei 23°C wurden die Mischungen in einem Innenmischer redispergiert (2. Mischstufe), wobei die in **Tabelle 2** vermerkten Komponenten zugesetzt wurden.

**Tabelle 2: Zweite Mischstufe (Innenmischer)**

| | ***Compound Nr***. | ***VV1*** | ***2*** | ***3*** | ***4*** | ***5*** | ***6*** | ***7*** | ***8*** | ***9*** | ***10*** |
|---|---|---|---|---|---|---|---|---|---|---|---|
| **Komponente b)** | **DBU ⁶⁾** | - | - | - | - | - | - | - | 0,5 | - | 0,25 |

Nach Erreichung einer Innentemperatur von 150°C/ 6 min. wurde die Mischung ausgeworfen und auf einer auf 40°C vorgewärmten Walze abgekühlt. Die Zugabe der in **Tabelle 3** genannten Mischungsbestandteile erfolgte bei einer Temperatur <90°C ohne vorhergehende Zwischenlagerung.

**Tabelle 3: Abschließende Mischstufe (Walze)**

| | ***Compound Nr***. | ***VV1*** | ***2*** | ***3*** | ***4*** | ***5*** | ***6*** | ***7*** | ***8*** | ***9*** | ***10*** |
|---|---|---|---|---|---|---|---|---|---|---|---|
| **Komponente c)** | **Schwefel ¹⁴⁾** | 1,9 | 1,9 | 1,9 | 1,9 | 1,9 | 1,9 | 1,9 | 1,9 | 1,9 | 1,9 |
| **Komponente d)** | **CBS ¹⁵⁾** | 1,9 | 1,9 | 1,9 | 1,9 | 1,9 | 1,9 | 1,9 | 1,9 | 1,9 | 1,9 |
| **Komponente b)** | **DBU ⁶⁾** | - | - | - | - | - | - | - | - | 0,5 | 0,25 |

| | | | | | | | | | | | |
|---|---|---|---|---|---|---|---|---|---|---|---|
| 14) Löslicher Schwefel (Mahlschwefel 90/95° Chancel® der Solvay Barium Strontium) 15) N-Cyclohexyl-2-benzthiazylsulfenamid (Vulkanox®CZ/C der Lanxess Deutschland GmbH) | | | | | | | | | | | |

### B UNTERSUCHUNGEN AN DEN KAUTSCHUKMISCHUNGEN

Zur Beurteilung des Verarbeitungsverhaltens wurden an den unvulkanisierten Kautschukmischungen die Mooney-Viskosität nach 1 min. (ML1+1/100°C) und nach 4 min. (ML1+4/100°C) sowie die Mooney Relaxation nach 10 und 30 sec nach ***ASTM D1646*** bestimmt.

**Tabelle 4: Mischungseigenschaften**

| ***Compound Nr.*** | ***VV1*** | ***2*** | ***3*** | ***4*** | ***5*** | ***6*** | ***7*** | ***8*** | ***9*** | ***10*** |
|---|---|---|---|---|---|---|---|---|---|---|
| ML 1+1/100°C [ME] | 85,5 | 90,9 | 88,7 | 91,9 | 93,7 | 91,2 | 90,6 | 88,7 | 92,7 | 90,6 |
| ML 1+4/100°C [ME] | 77,5 | 78,4 | 79,0 | 82,8 | 87,7 | 83,3 | 83,4 | 78,2 | 80,9 | 79,1 |
| Mooney Relaxation /10 sec. [%] | 25,3 | 25,2 | 25,5 | 25,5 | 26,6 | 26,2 | 25,6 | 24,4 | 25,4 | 24,6 |
| Mooney Relaxation /30 sec. [%] | 17,8 | 18,7 | 18,5 | 18,7 | 19,8 | 19,3 | 18,6 | 17,8 | 18,9 | 18,2 |

Bei leicht erhöhten Mischungsviskositäten ML 1+1 (100°C) und ML 1+4/100°C weisen die ***erfindungsgemäßen Mischungen 2, 3, 4, 5, 6, 7, 8, 9 und 10*** geringfügig erhöhte Mooneyrelaxationen (nach 10 und nach 30 sec.) auf. Dies kann als Hinweis dafür genommen werden, dass die Verarbeitbarkeit der erfindungsgemäßen Mischungen nahezu vergleichbar mit der des **Referenzcompounds VV1** ist.

### C VULKANISATION DER KAUTSCHUKMISCHUNGEN

### C1 VULKANISATIONSVERHALTEN

Das **Vulkanisationsverhalten** der Mischungen wurde im Rheometer bei 160°C nach ***DIN 53 529*** mit Hilfe des Monsantorheometers MDR 2000E untersucht. Auf diese Weise wurden charakteristische Daten wie Fₘᵢₙ, Fₘₐₓ, F_{max.}-Fₘᵢₙ, t₁₀, t₅₀, t₉₀ und t₉₅ bestimmt.

**Nach DIN 53 529, Teil 3 bedeuten:**

| | |
|---|---|
| Fₘᵢₙ: | Vulkameteranzeige im Minimum der Vernetzungsisotherme |
| Fₘₐₓ: | Vulkameteranzeige im Maximum der Vernetzungsisotherme |
| Fₘₐₓ - Fₘᵢₙ: | Differenz der Vulkameteranzeigen zwischen Maximum und Minimum |
| t₁₀: | Zeit, bei der 10% des Umsatzes erreicht sind |
| t₅₀: | Zeit, bei der 50% des Umsatzes erreicht sind |
| t₉₀: | Zeit, bei der 90% des Umsatzes erreicht sind |
| t₉₅: | Zeit, bei der 95% des Umsatzes erreicht sind |

Die Ergebnisse der Vulkameterprüfung sind in **Tabelle 5** zusammengefasst.

**Tabelle 5: Vulkameterprüfung**

| ***Compound Nr.*** | ***VV1*** | ***2*** | ***3*** | ***4*** | ***5*** | ***6*** | ***7*** | ***8*** | ***9*** | ***10*** |
|---|---|---|---|---|---|---|---|---|---|---|
| Fₘᵢₙ. [dNm] | 3,09 | 3,47 | 3,49 | 3,75 | 4,07 | 3,28 | 3,37 | 3,37 | 3,64 | 3,50 |
| Fₘₐₓ [dNm] | 17,07 | 18,47 | 17,77 | 17,89 | 19,12 | 17,49 | 17,47 | 18,87 | 20,15 | 19,76 |
| Fₘₐₓ - Fₐ [dNm] | 13,98 | 15,00 | 14,28 | 14,14 | 15,05 | 14,21 | 14,10 | 15,50 | 16,51 | 16,26 |
| t₁₀ [sec] | 207 | 184 | 160 | 128 | 100 | 69 | 53 | 141 | 110 | 125 |
| t₅₀ [sec] | 403 | 390 | 305 | 250 | 209 | 140 | 132 | 282 | 250 | 277 |
| t₉₀ [sec] | 993 | 1094 | 1007 | 952 | 934 | 722 | 737 | 991 | 971 | 989 |
| t₉₅ [sec] | 1286 | 1384 | 1325 | 1286 | 1279 | 1069 | 1068 | 1329 | 1309 | 1312 |
| t₉₀-t₁₀ [sec] | 786 | 910 | 847 | 824 | 834 | 653 | 684 | 850 | 861 | 864 |

Bei einer mengenmäßig im Vergleich mit dem ***Referenzbeispiel VV1*** reduzierten bzw. gleichen Dosierung der Komponente b) zeigen die ***erfindungsgemäßen Mischungen 2, 3, 4, 5, 6, 7, 8, 9 und 10*** größere Drehmomentdifferenzen und damit höhere Vernetzungsdichten. Dieser Effekt ist bei den ***erfindungsgemäßen Versuchen 8, 9 und 10*** (Dosierung von DBU in der 2. und 3. Mischstufe) besonders deutlich. Die Anvulkanisationszeit t₁₀ nimmt ab und die Vulkanisationsgeschwindigkeiten t₉₀-t₁₀ nimmt mit steigernder DBU-Menge zu ***(erfindungsgemäßen Mischungen 2, 3, 4, 5, 6 und 7).***

### C2 HERSTELLUNG VON VULKANISATEN

Die für die Vulkanisatcharakterisierung notwendigen **Prüfkörper** wurden durch Pressenvulkanisation der Mischungen bei einem Hydraulikdruck von 120 bar hergestellt. Die für die Herstellung der Prüfkörper verwendeten Vulkanisationsbedingungen sind in der folgenden **Tabelle 6** zusammengefasst.

**Tabelle 6: Vulkanisationsbedingungen**

| ***Compound Nr.*** | ***VV1*** | **2** | ***3*** | ***4*** | ***5*** | ***6*** | ***7*** | ***8*** | ***9*** | ***10*** |
|---|---|---|---|---|---|---|---|---|---|---|
| Vulkanisationstemperatur [°C] | 160 | 160 | 160 | 160 | 160 | 160 | 160 | 160 | 160 | 160 |
| Vulkanisationszeit [min.] | 38 | 38 | 38 | 38 | 38 | 21 | 21 | 38 | 38 | 38 |

### C3 UNTERSUCHUNG DER VULKANISATE

**An den Vulkanisaten wurden folgende Eigenschaften nach den genannten Normen bestimmt:**

| | |
|---|---|
| DIN 53505: | Shore A-Härte bei 23°C und 70°C |
| DIN 53512: | Rückprallelastizität bei 23°C und 70°C ("R23") |
| DIN 53504: | Spannungswerte bei 10%, 25%, 50%, 100%, 200% und 300 % Dehnung (σ₁₀, σ₂₅, σ₅₀, σ₁₀₀, σ₂₀₀ und σ₃₀₀), Zugfestigkeit sowie Bruchdehnung |
| DIN 53516: | Abrieb |

Die Vulkanisateigenschaften des ***Referenzbeispiels VV1*** und der ***erfindungsgemäßen Mischungen 2, 3, 4, 5, 6, 7, 8, 9 und 10*** sind in der folgenden **Tabelle 7** zusammengefasst.

**Tabelle 7: Vulkanisateigenschaften**

| ***Compound Nr.*** | ***VV1*** | ***2*** | ***3*** | ***4*** | ***5*** | ***6*** | ***7*** | ***8*** | ***9*** | ***10*** |
|---|---|---|---|---|---|---|---|---|---|---|
| Shore A-Härte bei 23°C | 63,0 | 63,6 | 63,7 | 63,3 | 65,0 | 63 | 64,1 | 62,8 | 65,2 | 63,7 |
| Shore A Härte bei 70°C | 59,8 | 60,1 | 59,5 | 60,9 | 61,9 | 60,4 | 61,3 | 56,9 | 61,8 | 60,9 |
| Rückprallelastizität/23°C ("R23") [%] | 25 | 26 | 26 | 26 | 26 | 29 | 28 | 26 | 25 | 25 |
| Rückprallelastizität/70°C ("R70") [%] | 57 | 57 | 58 | 60 | 62 | 65 | 63 | 58 | 56 | 55 |
| Delta "R70"-"R23" | 32 | 31 | 32 | 34 | 36 | 36 | 35 | 32 | 31 | 30 |
| Compression Set (24 h/23°C) [%] | 7,1 | 7,2 | 5,7 | 4,4 | 6,1 | 4,6 | 5,2 | 6,0 | 5,6 | 6,7 |
| σ₁₀ [MPa] | 0,5 | 0,5 | 0,5 | 0,5 | 0,5 | 0,5 | 0,5 | 0,5 | 0,6 | 0,6 |
| σ₂₅ [MPa] | 0,8 | 0,9 | 0,9 | 0,9 | 0,9 | 0,9 | 0,9 | 0,9 | 0,9 | 1,0 |
| σ₅₀ [MPa] | 1,2 | 2,3 | 2,5 | 2,6 | 3,0 | 1,5 | 1,5 | 2,4 | 2,3 | 2,3 |
| σ₁₀₀ [MPa] | 2,2 | 2,3 | 2,5 | 2,6 | 3,0 | 3,1 | 3,0 | 2,4 | 2,3 | 2,3 |
| σ₂₀₀ [MPa] | 6,1 | 5,6 | 6,8 | 7,2 | 8,9 | 9,1 | 9,1 | 6,2 | 5,9 | 5,8 |
| σ₃₀₀ [MPa] | 12,4 | 10,9 | 13,3 | 14,3 | - | 17,4 | - | 12,3 | 11,5 | 11,3 |
| σ₂₀₀ / σ₂₅ | 7,6 | 6,2 | 7,6 | 8,0 | 9,9 | 10,1 | 10,1 | 6,9 | 6,6 | 5,8 |
| Zugfestigkeit [MPa] | 21,7 | 17,7 | 16,2 | 18,0 | 12,8 | 17,2 | 14,9 | 20,0 | 20,8 | 19,0 |
| Bruchdehnung [%] | 431 | 405 | 345 | 344 | 252 | 301 | 270 | 413 | 438 | 411 |
| Abrieb [mm³] | 105 | 97 | 94 | 87 | 89 | 68 | 66 | 92 | 95 | 98 |

Bei den Vulkanisateigenschaften zeichnen sich die ***erfindungsgemäßen Beispiele 3, 4, 5, 6, 7 und 8*** durch eine Differenz der Rückprallelastiztäten von 70°C und 23°C aus, die höher oder gleich ist wie die des entsprechenden ***Vergleichsbeispiels VV1.*** Dies ist ein Hinweis auf eine gute Nassrutschfestigkeits/Rollwiderstands-Relation von Reifenlaufflächen.

Des Weiteren weisen die ***erfindungsgemäßen Beispiele 3, 4, 5, 6, 7, 8, 9 und 10*** im Vergleich mit dem ***Referenzbeispiel VV1*** bei reduzierter bzw. gleicher Dosierung (0,5 - 2,3 phr) der (Komponente b) einen reduzierten Compression Set aus. Dies ist ein Hinweis auf eine erhöhte Zahl an Vernetzungsstellen. Das Modulniveau (σ₅₀, σ₁₀₀, σ₂₀₀ und σ₃₀₀) und der Verstärkungsfaktor (σ₂₀₀ / σ₂₅) nehmen mit steigernder Dosierung der Komponente b) zu und sind bei den ***erfindungsgemäßen Beispielen 3, 4, 5, 6, 7*** gleich oder höher als bei dem ***Referenzbeispiel VV1.*** Dies sind Hinweise auf eine höhere Zahl an Netzstellen (höheres Modulniveau) und auf eine verbesserte Dispersion des Füllstoffs (größerer Verstärkungsfaktor).

Zur Erzielung eines hohen Modulniveaus und eines hohe Verstärkungsfaktors ist eine Dosierung der Komponente b) im 1. Mischschritt günstiger als im 2. oder letzten Mischschritt (Vergleich der ***erfindungsgemäßen Versuche 3 mit 8, 9 und 10*** bei der selben DBU-Dosierung von 0,5 phr).

Der DIN-Abrieb ist bei den ***erfindungsgemäßen Beispielen 2, 3, 4, 5, 6, 7, 8, 9 und 10*** niedriger als bei dem ***nicht erfindungsgemäßen Vergleichsbeispiel VV1.***

### Dynamische Beanspruchung im Goodrich-Flexometer:

Zur Beurteilung des dynamischen Verhaltens dickwandiger Artikel wurden die Vulkanisate im **Goodrich-Flexometer** nach DIN 53533 bei einer Vorspannung von: 1,0 MPa, einem Hub von 4,00 mm und einer Beanspruchungszeit von 25 min. bei 100°C untersucht. Hierbei wurden die Temperaturerhöhung sowie die bleibende Verformung nach 25 min. bestimmt **(Tabelle 8).**

**Tabelle 8: Goodrich-Flexometer**

| ***Compound Nr.*** | ***VV1*** | ***2*** | ***3*** | ***4*** | ***5*** | ***6*** | ***7*** | ***8*** | ***9*** | ***10*** |
|---|---|---|---|---|---|---|---|---|---|---|
| Temperaturerhöhung [°C] | 17,8 | 19,3 | 16,8 | 15,7 | 15,8 | 15,0 | 15,3 | 17,3 | 16,6 | 17,7 |
| Bleibende Verformung [%] | 4,4 | 5,6 | 4,4 | 4,0 | 3,2 | 3,2 | 3,6 | 4,0 | 4,0 | 4,0 |

Im Goodrich-Flexometer-Test weisen die ***erfindungsgemäßen Beispiele 3, 4, 5, 6,*** 7, ***8, 9 und 10*** (DBU-Dosierung in Mengen von 0,25-2,3 phr) im Vergleich mit dem ***nicht erfindungsgemäßen Vergleichsbeispiel VV1*** eine niedrigere Temperaturerhöhung (niedrigerer heat-build-up) sowie eine niedrigere bleibende Verformung auf. Dies sind Hinweise für eine höhere Lebensdauer erfindungsgemäß hergestellter dickwandiger Vulkanisate bei dynamischer Belastung. Die positiven Resultate im Goodrich-Flexometer-Test sind unabhängig davon, ob die DBU-Dosierung im 1. oder in einem nachgeschalteten Mischschritt erfolgt.

### Dynamische Eigenschaften im Eplexor-Test

Zur Beurteilung von Nassrutschfestigkeit und Rollwiderstand wurden die Vulkanisate bei 0°C und 60°C einer weiteren dynamischen Prüfung unterzogen. Hierfür wurde ein Eplexor-Gerät (Eplexor 500 N) der Firma Gabo-Testanlagen GmbH, Ahlden, Deutschland nach DIN53513 bei 10Hz an Zylinderproben bei einer Heizrate von 1K/min. im Temperaturbereich -100°C und +100°C verwendet. Die Messungen erfolgten im Kompressionsmodus bei einer statischen Kompression von 1 % und einer dynamischen Verformung von 0,1%.

Mit der Methode wurden folgende Messgrößen ermittelt, die nach ASTM 5992-96 bezeichnet wurden:

| | |
|---|---|
| E': | Speichermodul |
| E": | Verlustmodul |
| tan δ: | Verlustfaktor (E"/E') |

Ein hoher tan δ-Wert bei 0°C ist ein Hinweis auf gute Nassrutschfestigkeit. Entsprechend weist ein niedriger tan δ-Wert bei 60°C auf einen niedrigen Rollwiderstand sowie auf einen niedrigen heat-build-up hin. Ein hohe Differenz der tan δ-Werte bei 0°C und 60°C ist ein Hinweis auf eine gute Nassrutschfestigkeit/Rollwiderstands-Relation von Reifenlaufflächen (**Tabelle** 9)

**Tabelle 9: Dynamische Eigenschaften / Eplexor-Test**

| ***Compound Nr.*** | ***VV1*** | ***2*** | ***3*** | ***4*** | ***5*** | ***6*** | ***7*** | ***8*** | ***9*** | ***10*** |
|---|---|---|---|---|---|---|---|---|---|---|
| E' (0°C) / 10 Hz [MPa] | 38,82 | 37,40 | 33,66 | 33,34 | 32,47 | 30,14 | 34,29 | 37,28 | 40,04 | 42,71 |
| E"(0°C) / 10 Hz [MPa] | 18,54 | 17,19 | 17,33 | 17,70 | 17,53 | 16,19 | 18,07 | 18,08 | 17,79 | 18,18 |
| tan δ (0°C) / 10 Hz | 0,477 | 0,459 | 0,515 | 0,531 | 0,540 | 0,538 | 0,527 | 0,485 | 0,444 | 0,425 |
| E' (60°C) / 10 Hz [MPa] | 7,72 | 7,81 | 6,70 | 6,22 | 6,03 | 6,17 | 6,56 | 7,71 | 8,67 | 9,21 |
| E"(60°C) / 10 Hz [MPa] | 0,86 | 0,96 | 0,74 | 0,65 | 0,61 | 0,54 | 0,61 | 0,90 | 1,05 | 1,11 |
| tan δ (60°C) / 10 Hz | 0,112 | 0,123 | 0,111 | 0,104 | 0,102 | 0,088 | 0,094 | 0,117 | 0,121 | 0,120 |
| tan δ (0°C) - tan δ (60°C) | 0,365 | 0,336 | 0,404 | 0,427 | 0,438 | 0,45 | 0,433 | 0,368 | 0,323 | 0,305 |

Bei Einmischung der Komponente b) im **1.** Mischschritt in Mengen von 0,5 bis 2,3 phr (***erfindungsgemäße* Beispiele *3, 4, 5, 6 und 7***) werden Vulkanisate erhalten, die sich im Vergleich mit dem ***nicht erfindungsgemäßen Vergleichsbeispiel VV1*** durch einen hohen tan δ -Wert bei 0°C, einen niedrigen tan δ -Wert bei 60°C sowie eine hohe Differenz der tan δ-Werte zwischen 0°C und 60°C auszeichnen. Dies sind Hinweise auf eine gute Nassrutschfestigkeits/Rollwiderstands-Relation von Reifenlaufflächen. Durch Vergleich der ***erfindungsgemäßen Beispiele 8, 9 und 10 mit 3**,* bei denen jeweils eine DBU-Menge von 0,5 phr dosiert wurde, wird deutlich, dass bei einer Dosierung der Komponente b) im 1. Mischschritt bessere Ergebnisse erzielt werden.

Zusammenfassend kann festgestellt werden, dass mit bi- oder polycyclischen Aminen wie DBU ein DPG-Ersatz möglich ist, wobei für eine vollständige DPG-Substitution von 2,3 phr DBU-Mengen von 0,3 bis 2,3, vorzugsweise 0,5 bis 1,5 phr eingesetzt werden müssen. Besonders gute Effekte werden erzielt, wenn DBU in der 1. Mischstufe eingemischt wird.

## Patentansprüche

1. Vulkanisierbare Kautschukmischungen enthaltend
a) mindestens einen doppelbindungshaltigen Kautschuk,
b) mindestens ein bi- oder polycyclisches Amin,
c) Schwefel und/oder mindestens einen Schwefelspender als Vernetzer,
d) mindestens einen Vulkanisationsbeschleuniger, der von Komponente b) verschieden ist,
e) Zinkoxid und Stearinsäure und/oder Zinkstearat,
f) mindestens einen Füllstoff,
g) gegebenenfalls mindestens eine schwefelhaltige siliciumorganische Verbindung, und
h) gegebenenfalls ein oder mehrere weitere Additive,
wobei die Kautschukmischung keinen Vernetzer enthält, der zwei oder mehr Aminogruppen aufweist oder aber im Rahmen einer Vernetzung zwei oder mehr Aminogruppen in-situ freisetzen kann.

2. Vulkanisierbare Kautschukmischungen nach Anspruch 1, wobei mindestens ein doppelbindungshaltiger Kautschuk a) ausgewählt aus der Gruppe bestehend aus NR (Naturkautschuk), EPDM (Ethylen-Propylen-Dien Kautschuk), SBR (Vinylaromat/Dien-Kautschuk), BR (Polybutadienkautschuk), IR (Polyisopren), SIBR (Styrol/Isopren/Butadien-Kautschuk), BIR (Butadien/Isopren-Kautschuk), IIR (Butylkautschuk, d.h. Isobuten/Isopren-Kautschuk), XIIR (Halobutylkautschuk, insbesondere Chlor- oder Brombutylkautschuk), NBR (Nitrilkautschuk), XNBR (carboxylierter Butadien/Acrylnitril-Kautschuk), SNBR (Styrol/ Butadien/Acrylnitril-Kautschuk), XSBR (carboxylierter Styrol/Butadien-Kautschuk), CR (Polychloropren) und ENR (epoxydierter Naturkautschuk) eingesetzt wird.

3. Vulkanisierbare Kautschukmischungen nach Anspruch 1 oder 2, wobei das mindestens eine bi-oder polycyclische Amin b) ein bi-oder polycyclisches Amin der Formel (I) oder (II) ist 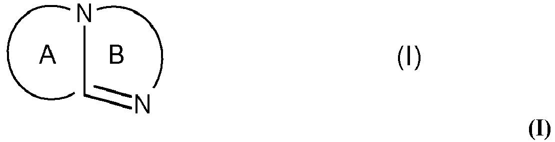 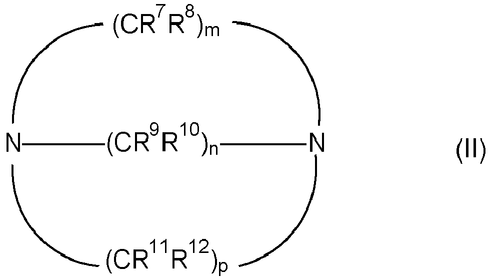 worin
A für einen aliphatischen, unsubstituierten oder substituierten, gegebenenfalls eine Doppelbindung aufweisenden, 4 bis 8 gliedrigen heterocyclischen Ring steht, bevorzugt für einen unsubstituierten 5 bis 7 gliedrigen heterocyclischen Ring, der 1 oder 2 N-Atome und aufweist;
B für einen aliphatischen, unsubstituierten oder substituierten, gegebenenfalls eine Doppelbindung aufweisenden, 4 bis 8 gliedrigen heterocyclischen Ring steht, bevorzugt für einen unsubstituierten, eine Doppelbindung aufweisenden, 5 bis 6 gliedrigen heterocyclischen Ring, der 2 N-Atome aufweist;
R⁷, R⁸, R⁹, R¹⁰, R¹¹ und R¹² gleich oder verschieden sind und für H oder aliphatische Reste mit 1 bis 4 Kohlenstoffatomen stehen, bevorzugt H, Methyl, Ethyl, n-Propyl, Isopropyl, n-Butyl, sec.-Butyl, Isobutyl oder tert.-Butyl, besonders bevorzugt H, und
m, n und p gleich oder verschieden sind und 1, 2, 3 oder 4, bevorzugt 1 oder 2, besonders bevorzugt 2 bedeuten,
bevorzugt ein bi-oder polycyclisches Amin ausgewählt aus der Gruppe bestehend aus 1,8-Diazabicyclo[5.4.0] undecen-7 (DBU), 1,5-Diazabicyclo[4.3.0]-nonen-5 (DBN), 1,4-Diazabicyclo [2.2.2]octan (DABCO), 1,5,7-Triazabicyclo[4.4.0]dec-5-en (TBD) und 7-Methyl-1,5,7-triazabicyclo[4.4.0] dec-5-en (MTBD).

4. Vulkanisierbare Kautschukmischungen nach einem der Ansprüche 1 bis 3, wobei mindestens ein Vulkanisationsbeschleuniger d) ausgewählt aus der Gruppe bestehend aus Benzothiazyl-2-cyclohexyl-sulfenamid (CBS), Benzothiazyl-2-tert.-butylsulfenamid (TBBS), Benzothiazyl-2-dicyclohexylsulfenamid (DCBS), 1,3-Diethylthioharnstoff (DETU), 2-Mercaptobenzothiazol (MBT) und dessen Zinksalzen (ZMBT), Kupfer-dimethyldithiocarbamat (CDMC), Benzothiazyl-2-sulfenmorpholid (MBS), Benzothiazyldicyclohexylsulfenamid (DCBS), 2-Mercaptobenzothiazoldisulfid (MBTS), Dimethyldiphenylthiuramdisulfid (MPTD), Tetrabenzylthiuramdisulfid (TBZTD), Tetramethylthiorammonosulfid (TMTM), Dipentamethylenthiuramtetrasulfid (DPTT), Tetra-iso-butylthiuramdisulfid (IBTD), Tetraethylthiuramdisulfid (TETD), Tetramethylthiuramdisulfid (TMTD), Zink-N-dimethyl-dithiocarbamat (ZDMC), Zink-N-diethyldithiocarbamat (ZDEC), Zink-N-dibutyl-dithiocarbamat (ZDBC), Zink-N-ethylphenyl-dithiocarbamat (ZEBC), Zinkdibenzyldithiocarbamat (ZBEC), Zinkdiisobutyldithiocarbamat (ZDiBC), Zink-N-pentamethylendithiocarbamat (ZPMC), Zink-N-ethylphenyldithiocarbamat (ZEPC), Zink-2-Mercaptobenzothiazol (ZMBT), Ethylenthioharnstoff (ETU), Tellurdiethyldithiocarbamat (TDEC), Diethylthioharnstoff (DETU), N,N-Ethylenthioharnstoff (ETU), Diphenylthioharnstoff (DPTU), Triethyltrimethyltriamin (TTT); N-t-Butyl-2-benzo-thiazol-sulfenimid (TBSI); 1,1'-Dithiobis(4-methylpiperazin); Hexamethylendiamincarbamat (HMDAC); Benzothiazyl-2tert.-butylsulfenamid (TOBS), N,N'-Diethylthiocarbamyl-N'-cyclo-hexylsulfenamid (DETCS), N-Oxidiethylendithiocarbamyl-N'-oxydiethylensulfenamid (OTOS), 4,4'-Dihydroxydiphenylsulfon (Bisphenol S), Zn-isopropylxanthogenat (ZIX), Selen-, Tellur-, Blei-, Kupfer- und Erdalkalisalzen von Dithiocarbaminsäuren; Pentamethylenammonium-N-pentamethylendithiocarbamat; Dithiophosphorsäurederivate; Cyclohexylethylamin; Dibutylamin; Polyethylenpolyaminen und Polyethylenpolyiminen eingesetzt wird.

5. Vulkanisierbare Kautschukmischungen nach einem der Ansprüche 1 bis 4, wobei mindestens ein Füllstoff f) ausgewählt aus der Gruppe bestehend aus Kieselsäure, Ruß, Silikaten, Oxiden und organischen Füllstoffen eingesetzt wird.

6. Vulkanisierbare Kautschukmischungen nach Anspruch 5, enthaltend
f) Kieselsäure als mindestens einen Füllstoff und
g) mindestens eine schwefelhaltige siliciumorganische Verbindung.

7. Vulkanisierbare Kautschukmischungen nach Anspruch 6, enthaltend
g) mindestens eine schwefelhaltige siliciumorganische Verbindung mit einer der allgemeinen Strukturformeln (III) oder (IV) 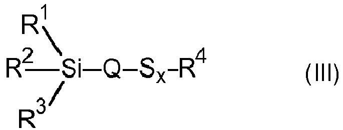 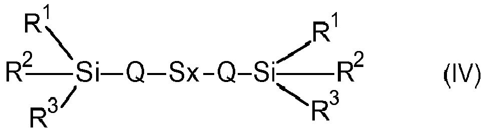 worin
x im Mittel 1 bis 10, bevorzugt 1 bis 6 sein kann,
R¹, R² und R³ gleiche oder verschiedene Alkoxygruppen, bevorzugt gleiche oder verschiedene C₁-C₁₀-Alkoxygruppen, bedeuten,
Q eine Spacergruppe darstellt, bevorzugt auf der Basis von aliphatischen, heteroaliphatischen, aromatischen oder heteroaromatischen Kohlenstoffketten mit 1 bis 20 Kohlenstoffatomen, bevorzugt 1 bis 10 Kohlenstoffatomen, und optional 1 bis 3 Heteroatomen, insbesondere Sauerstoff, Schwefel oder Stickstoff,
R⁴ Wasserstoff, geradkettiges oder verzweigtes Alkyl, wobei die Alkylkette optional durch ein oder mehrere, bevorzugt bis zu fünf Heteroatome, insbesondere Sauerstoff, Schwefel oder N(H), unterbrochen ist, Aryl, bevorzugt C₆-C₂₀-Aryl und/oder einen Rest darstellt mit nachfolgenden Strukturen: 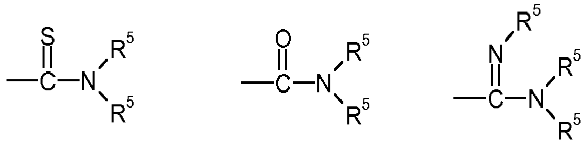 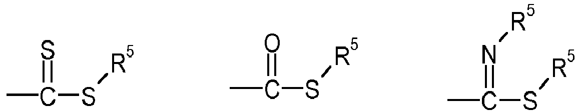 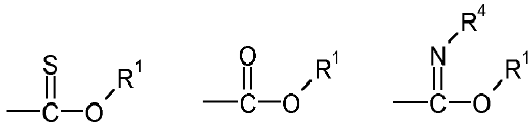 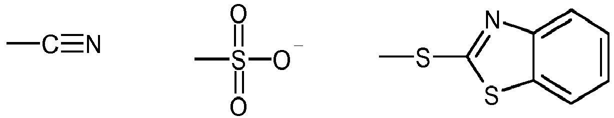 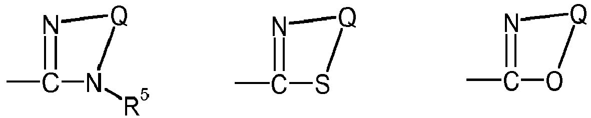
worin
R⁵ für einen aliphatischen, heteroaliphatischen, cycloaliphatischen, aromatischen oder heteroaromatischen Rest mit 1 bis 20, bevorzugt 1 bis 10, Kohlenstoffatomen und mit optional 1 bis 3 Heteroatomen, vorzugsweise Sauerstoff, Stickstoff oder Schwefel steht.

8. Vulkanisierbare Kautschukmischungen nach Anspruch 7 enthaltend g) mindestens ein Bis(tri-ethoxy-silyl-propyl)-polysulfan der Formel (V) mit n= 2-4.

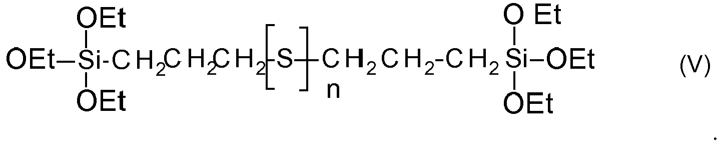

9. Vulkanisierbare Kautschukmischung nach einem der Ansprüche 1 bis 8, enthaltend
a) mindestens einen doppelbindungshaltigen Kautschuk,
b) 0,1 bis 5,0 Gew.-Teile, vorzugsweise 0,2 bis 4,0 Gew.-Teile, besonders bevorzugt 0,25 bis 3,5 Gew.-Teile mindestens eines bi- oder polycyclischen Amins,
c) 0,1 bis 15 Gew.-Teile, bevorzugt 0,1-10 Gew.-Teile Schwefel oder mindestens eines Schwefelspenders,
d) 0,1 bis 15 Gew.-Teile, bevorzugt 0,1-10 Gew.-Teile mindestens eines Vulkanisationsbeschleunigers, der von Komponente b) verschieden ist,
e) 0,5 bis 15 Gew.-Teile, bevorzugt 1 bis 7,5 Gew.-Teile Zinkoxid und 0,1 bis 7 Gew.-Teile, bevorzugt 0,25 bis 7 Gew.-Teile Stearinsäure, und zusätzlich oder alternativ zum Zinkoxid und Stearinsäure 0,25 bis 5 Gew.-Teile, bevorzugt 1 bis 3 Gew.-Teile Zinkstearat und
f) 5 bis 300 Gew.-Teile, bevorzugt 10 bis 200 Gew.-Teile und besonders bevorzugt 20 bis 150 Gew.-Teile mindestens eines Füllstoffs,
wobei alle vorgenannten Angaben in Gew.-Teilen jeweils auf 100 Gewichtsteile der Kautschukkomponente(n) a) bezogen sind und wobei diese Kautschukmischung keinen Vernetzer enthält, der zwei oder mehr Aminogruppen aufweist oder aber im Rahmen einer Vernetzung zwei oder mehr Aminogruppen in-situ freisetzen kann.

10. Vulkanisierbare Kautschukmischung nach Anspruch 9 enthaltend
a) mindestens einen doppelbindungshaltigen Kautschuk,
b) 0,1 bis 5,0 Gew.-Teile, vorzugsweise 0,2 bis 4,0 Gew.-Teile, besonders bevorzugt 0,25 bis 3,5 Gew.-Teile mindestens eines aliphatischen gesättigten oder ungesättigten bi- oder polycyclischen Amins ausgewählt aus der Gruppe bestehend aus 1,8-diazabicyclo[5.4.0]undecen-7 (DBU), 1,5-diazabicyclo[4.3.0]-nonen-5 (DBN), 1,4-diazabicyclo[2.2.2]octan (DABCO), 1,5,7-Triazabicyclo[4.4.0]decen-5 (TBD) und 7-Methyl-1,5,7-triazabicyclo[4.4.0]decen-5 (MTBD)
c) 0,1 bis 15 Gew.-Teile, bevorzugt 0,1-10 Gew.-Teile Schwefel oder Schwefelspender,
d) 0,1 bis 15 Gew.-Teile, bevorzugt 0,1-10 Gew.-Teile mindestens einen Vulkanisationsbeschleunigers, der von Komponente b) verschieden ist,
e) 0,5 bis 15 Gew.-Teile, bevorzugt 1 bis 7,5 Gew.-Teile Zinkoxid und 0,1 bis 7 Gew.-Teile, bevorzugt 0,25 bis 7 Gew.-Teile Stearinsäure, und zusätzlich oder alternativ zum Zinkoxid und Stearinsäure 0,25 bis 5 Gew.-Teile, bevorzugt 1 bis 3 Gew.-Teile Zinkstearat und
f) 5 bis 300 Gew.-Teile, bevorzugt 10 bis 200 Gew.-Teile und besonders bevorzugt 20 bis 150 Gew.-Teile mindestens eines Füllstoffs, bevorzugt Kieselsäure und
g) 0,5 bis 10 Gew.-Teile, bevorzugt 1 bis 8 Gew.-Teile mindestens einem Bis(tri-ethoxy-silyl-propyl)-polysulfan der Formel (V) mit n= 2-4 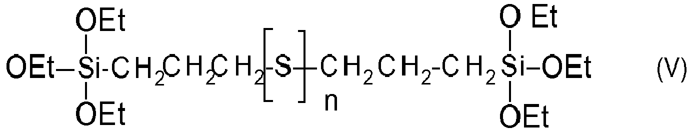
wobei alle vorgenannten Angaben in Gew.-Teilen jeweils auf 100 Gewichtsteile der Kautschukkomponente a) bedeutet und wobei diese Kautschukmischung keinen Vernetzer enthält, der zwei oder mehr Aminogruppen aufweist oder aber im Rahmen einer Vernetzung zwei oder mehr Aminogruppen in-situ freisetzen kann.

11. Verfahren zur Herstellung von vulkanisierbaren Kautschukmischungen nach einem der Ansprüche 1 bis 10, **dadurch gekennzeichnet, dass** man die Komponenten a) bis f) und gegebenenfalls g) und gegebenenfalls h) in einer oder mehreren Stufen miteinander mischt.

12. Verfahren zur Herstellung von Vulkanisaten, **dadurch gekennzeichnet, dass** man vulkanisierbare Kautschukmischungen nach einem der Ansprüche 1 bis 10 einer Vernetzungsreaktion unterwirft, bevorzugt bei einer Temperatur im Bereich von 100 bis 250°C, insbesondere von 130 bis 180°C, im Allgemeinen bei einem Druck im von 1 bis 100 bar.

13. Verfahren nach Anspruch 12, **dadurch gekennzeichnet, dass** die Vernetzungsreaktion im Rahmen eines Formgebungsprozesses stattfindet.

14. Vulkanisate erhältlich durch das Verfahren nach Anspruch 12 oder 13.

15. Verwendung von vulkanisierbaren Mischungen nach einem der Ansprüche 1 bis 10 zur Herstellung von Reifen und Reifenbauteilen, insbesondere Reifenlaufflächen, Subtreads, Karkassen, Seitenwänden, verstärkten Seitenwänden für Notlaufreifen und Apexmischungen sowie für die Herstellung von technischen Gummiartikeln, bevorzugt Dämpfungselementen, Walzenbelägen, Belägen von Förderbändern, Riemen, Spinnkopsen, Dichtungen, Golfballkernen und Schuhsohlen.

16. Verwendung mindestens eines bi- oder polycyclischen Amins in Kombination mit Schwefel und/oder mindestens einem Schwefelspender als Vernetzer zur Vernetzung von Kautschukmischungen enthaltend - neben dem mindestens einem bi- oder polycyclischen Amin und Schwefel und/oder mindestens einem Schwefelspender -
a) mindestens einen doppelbindungshaltigen Kautschuk,
d) mindestens einen Vulkanisationsbeschleuniger, der von dem bi- oder polycyclischen Amin verschieden ist,
e) Zinkoxid und Stearinsäure und/oder Zinkstearat,
f) mindestens einen Füllstoff,
g) gegebenenfalls mindestens eine schwefelhaltige siliciumorganische Verbindung, und
h) gegebenenfalls ein oder mehrere weitere Additive,
wobei diese Kautschukmischung keinen Vernetzer enthält, der zwei oder mehr Aminogruppen aufweist oder aber im Rahmen einer Vernetzung zwei oder mehr Aminogruppen in-situ freisetzen kann.
